(19)

**Europäisches Patentamt**
**European Patent Office**
**Office européen des brevets**

(11) **EP 4 299 525 A1**

(12) **EUROPEAN PATENT APPLICATION**
published in accordance with Art. 153(4) EPC

(43) Date of publication:
**03.01.2024 Bulletin 2024/01**

(21) Application number: **21928073.2**

(22) Date of filing: **03.12.2021**

(51) International Patent Classification (IPC):
*C01G 9/00* (2006.01)   *C01G 15/00* (2006.01)
*C01G 25/00* (2006.01)   *C01G 27/00* (2006.01)
*C03C 10/16* (2006.01)   *H01M 4/13* (2010.01)
*H01M 4/62* (2006.01)    *H01B 1/06* (2006.01)
*C01F 17/36* (2020.01)   *H01M 10/052* (2010.01)
*H01M 10/0562* (2010.01)

(52) Cooperative Patent Classification (CPC):
**C01F 17/36; C01G 9/00; C01G 15/00; C01G 25/00;**
**C01G 27/00; C03C 10/16; H01B 1/06; H01M 4/13;**
**H01M 4/62; H01M 10/052; H01M 10/0562;**
**Y02E 60/10**

(86) International application number:
**PCT/JP2021/044436**

(87) International publication number:
**WO 2022/180980 (01.09.2022 Gazette 2022/35)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **26.02.2021   JP 2021031020**
**26.02.2021   JP 2021031021**
**26.02.2021   JP 2021031023**
**26.02.2021   JP 2021031026**

(71) Applicant: **Panasonic Intellectual Property**
**Management Co., Ltd.**
**Osaka 571-0057 (JP)**

(72) Inventors:
• MIZUNO, Keita
  **Tokyo 103-0022 (JP)**
• ASANO, Tetsuya
  **Tokyo 103-0022 (JP)**
• SAKAI, Akihiro
  **Tokyo 103-0022 (JP)**

(74) Representative: **Grünecker Patent- und**
**Rechtsanwälte**
**PartG mbB**
**Leopoldstraße 4**
**80802 München (DE)**

(54) **SOLID ELECTROLYTE MATERIAL AND BATTERY USING SAME**

(57)   A solid electrolyte material of the present disclosure contains Li, Yb, M, and X. M is at least one selected from the group consisting of Mg, Ca, Sr, Ba, Zn, Y, Tb, Gd, Sm, In, Zr, and Hf. X is at least one selected from the group consisting of F, Cl, Br, and I. A battery 1000 of the present disclosure includes a positive electrode 201, a negative electrode 203, and an electrolyte layer 202 disposed between the positive electrode 201 and the negative electrode 203. At least one selected from the group consisting of the positive electrode 201, the negative electrode 203, and the electrolyte layer 202 contains the solid electrolyte material of the present disclosure.

FIG. 1

EP 4 299 525 A1

**Description**

Technical Field

The present disclosure relates to a solid electrolyte material and a battery using the same.

Background Art

Patent Literature 1 discloses an all-solid-state battery using a sulfide solid electrolyte material.

Non Patent Literatures 1 and 2 disclose solid electrolyte materials represented by the compositional formulas $Li_3YbCl_6$ and $Li_3YbBr_6$, respectively.

Citation List

Patent Literature

PTL 1: Japanese Unexamined Patent Application Publication No. 2011-129312
NPL 1: Z. anorg. allg. Chem., 623, 1067-1073 (1997)
NPL 2: Z. anorg. allg. Chem., 623, 1352-1356 (1997)

Summary of Invention

Technical Problem

An object of the present disclosure is to provide a novel and highly useful solid electrolyte material.

Solution to Problem

A solid electrolyte material of the present disclosure contains Li, Yb, M, and X, wherein

M is at least one selected from the group consisting of Mg, Ca, Sr, Ba, Zn, Y, Tb, Gd, Sm, In, Zr, and Hf, and
X is at least one selected from the group consisting of F, Cl, Br, and I.

Advantageous Effects of Invention

The solid electrolyte material provided according to the present disclosure is novel and highly useful.

Brief Description of Drawings

[Fig. 1] Fig. 1 illustrates a sectional view of a battery 1000 according to a second embodiment.
[Fig. 2] Fig. 2 illustrates a schematic view of a pressure forming die 300 used to evaluate the ion conductivity of a solid electrolyte material.
[Fig. 3] Fig. 3 is a graph illustrating a Cole-Cole plot obtained by alternating current (AC) impedance measurement of a solid electrolyte material of EXAMPLE 1.
[Fig. 4] Fig. 4 is a graph illustrating X-ray diffraction patterns of solid electrolyte materials of EXAMPLES 1, 3 to 14, and 16 to 24, and COMPARATIVE EXAMPLE 2.
[Fig. 5] Fig. 5 is a graph illustrating X-ray diffraction patterns of solid electrolyte materials of EXAMPLES 2, 3, and 15, and COMPARATIVE EXAMPLE 1.
[Fig. 6] Fig. 6 is a graph illustrating X-ray diffraction patterns of solid electrolyte materials of EXAMPLES 8 to 17.
[Fig. 7] Fig. 7 is a graph illustrating initial discharge characteristics of a battery of EXAMPLE 1.
[Fig. 8] Fig. 8 is a graph illustrating a Cole-Cole plot obtained by alternating current (AC) impedance measurement of a solid electrolyte material of EXAMPLE B1.
[Fig. 9] Fig. 9 is a graph illustrating X-ray diffraction patterns of solid electrolyte materials of EXAMPLES B1 to B5, B8 to B10, B12 to B22, and B24 to B33, and COMPARATIVE EXAMPLES B1 and B2.

[Fig. 10] Fig. 10 is a graph illustrating X-ray diffraction patterns of solid electrolyte materials of EXAMPLES B6, B7, B9 to B11, B19, B20, and B23, and COMPARATIVE EXAMPLES B1 and B2.

[Fig. 11] Fig. 11 is a graph illustrating initial discharge characteristics of a battery of EXAMPLE B1.

[Fig. 12] Fig. 12 is a graph illustrating a Cole-Cole plot obtained by alternating current (AC) impedance measurement of a solid electrolyte material of EXAMPLE C 1.

[Fig. 13] Fig. 13 is a graph illustrating X-ray diffraction patterns of solid electrolyte materials of EXAMPLES C1 to C4, and C11 to C13.

[Fig. 14] Fig. 14 is a graph illustrating X-ray diffraction patterns of solid electrolyte materials of EXAMPLES C5 to C10, C14, and C15.

[Fig. 15] Fig. 15 is a graph illustrating initial discharge characteristics of a battery of EXAMPLE C 1.

[Fig. 16] Fig. 16 is a graph illustrating a Cole-Cole plot obtained by alternating current (AC) impedance measurement of a solid electrolyte material of EXAMPLE D1.

[Fig. 17] Fig. 17 is a graph illustrating X-ray diffraction patterns of solid electrolyte materials of EXAMPLES D1, D2, D4, D5, D7 to D19, D22 to D24, and D26, and COMPARATIVE EXAMPLES D1 and D2.

[Fig. 18] Fig. 18 is a graph illustrating X-ray diffraction patterns of solid electrolyte materials of EXAMPLES D3, D6, D20 to D22, and D25 to D27, and COMPARATIVE EXAMPLES D1 and D2.

[Fig. 19] Fig. 19 is a graph illustrating initial discharge characteristics of a battery of EXAMPLE D 1.

Description of Embodiments

Hereinbelow, embodiments of the present disclosure will be described with reference to the drawings. The present disclosure is not limited to those embodiments discussed below.

(First Embodiment)

A solid electrolyte material according to a first embodiment contains Li, Yb, M, and X. M is at least one selected from the group consisting of Mg, Ca, Sr, Ba, Zn, Y, Tb, Gd, Sm, In, Zr, and Hf. X is at least one selected from the group consisting of F, Cl, Br, and I.

The solid electrolyte material according to the first embodiment is a novel and highly useful solid electrolyte material. For example, the solid electrolyte material according to the first embodiment may have practical lithium ion conductivity and may have, for example high lithium ion conductivity. Here, the high lithium ion conductivity is, for example, greater than or equal to $5.0 \times 10^{-5}$ S/cm near room temperature (for example, 25°C). That is, the solid electrolyte material according to the first embodiment may have an ion conductivity of, for example, greater than or equal to $5.0 \times 10^{-5}$ S/cm.

The solid electrolyte material according to the first embodiment may be used to obtain a battery having excellent charge-discharge characteristics. An example of such batteries is an all-solid-state battery. The all-solid-state battery may be a primary battery or a secondary battery.

The solid electrolyte material according to the first embodiment does not substantially contain sulfur. The phrase that the solid electrolyte material according to the first embodiment does not substantially contain sulfur means that the solid electrolyte material does not contain sulfur as a constituent element, except for sulfur that is incidentally mixed as an impurity. In this case, the amount of sulfur mixed as an impurity in the solid electrolyte material is, for example, less than or equal to 1 mol%. The solid electrolyte material according to the first embodiment does not contain sulfur. The sulfurfree solid electrolyte material does not generate hydrogen sulfide even when exposed to air and is therefore highly safe. The sulfide solid electrolyte disclosed in Patent Literature 1 may generate hydrogen sulfide when exposed to air.

The solid electrolyte material according to the first embodiment may contain elements that are incidentally mixed. For example, such elements are hydrogen, oxygen, and nitrogen. Such elements may be present in ingredient powders for the solid electrolyte material or in the atmosphere in which the solid electrolyte material is produced or stored. In the solid electrolyte material according to the first embodiment, the amount of such incidental elements is, for example, less than or equal to 1 mol%.

In order to increase ion conductive properties of the solid electrolyte material, the solid electrolyte material according to the first embodiment may be such that M is at least one selected from the group consisting of Mg, Ca, Sr, Ba, and Zn. M may be at least one selected from the group consisting of Mg, Ca, Sr, and Zn.

In order to increase ion conductive properties of the solid electrolyte material, the solid electrolyte material according to the first embodiment may be such that X is at least one selected from the group consisting of Cl, Br, and I.

The solid electrolyte material according to the first embodiment may be a material represented by the following compositional formula (1):

$$\mathrm{Li}_{6-3a-2b}\mathrm{Yb}_a\mathrm{M}_b\mathrm{Cl}_{6-x-y}\mathrm{Br}_x\mathrm{I}_y \ldots \qquad (1)$$

Here, the formula satisfies the following five relations:

$$0.2 \leq a < 1.4,$$

$$0 < b < 0.9,$$

$$0 \leq x \leq 6,$$

$$0 \leq y \leq 3,$$

and $0 \leq x + y \leq 6$. The material represented by the compositional formula (1) has high ion conductivity.

The upper limit and the lower limit of the range of a in the compositional formula (1) may be defined by a combination of any numbers selected from 0.5, 0.6, 0.7, 0.75, 0.8, 0.85, 0.9, 1, and 1.1.

In order to increase ion conductive properties of the solid electrolyte material, the compositional formula (1) may satisfy $0.5 \leq a \leq 1.1$.

The upper limit and the lower limit of the range of b in the compositional formula (1) may be defined by a combination of any numbers selected from greater than 0 (that is, 0 < b), 0.05, 0.1, 0.15, 0.2, 0.3, 0.4, 0.5, and 0.6.

In order to increase ion conductive properties of the solid electrolyte material, the compositional formula (1) may satisfy $0 < b \leq 0.6$.

The upper limit and the lower limit of the range of x in the compositional formula (1) may be defined by a combination of any numbers selected from 0, 2, 3, and 6.

In order to increase ion conductive properties of the solid electrolyte material, the compositional formula (1) may satisfy $0 \leq y \leq 2$.

In order to increase ion conductive properties of the solid electrolyte material, the compositional formula (1) may satisfy the following five relations:

$$0.5 \leq a \leq 1.1,$$

$$0 < b \leq 0.6,$$

$$0 \leq x \leq 6,$$

$$0 \leq y \leq 2,$$

and

$$0 \leq x + y \leq 6.$$

The compositional formula (1) may satisfy $0 < b \leq 0.4$ and $a + b = 1$. According to the above configuration, the solid electrolyte material of the first embodiment achieves higher lithium ion conductivity.

In order to increase ion conductive properties of the solid electrolyte material, X may be at least two selected from the group consisting of F, Cl, Br, and I.

In order to increase ion conductive properties of the solid electrolyte material, M may include Zn. M may be Zn.

An X-ray diffraction pattern of the solid electrolyte material according to the first embodiment may be obtained by $\theta$-$2\theta$ X-ray diffractometry using Cu-K$\alpha$ radiation (1.5405 Å and 1.5444 Å wavelengths, that is, 0.15405 nm and 0.15444 nm wavelengths). The X-ray diffraction pattern obtained may have at least one peak in the range of diffraction angles $2\theta$ of greater than or equal to 13.0° and less than or equal to 15.0°, and at least two peaks in the range of diffraction angles $2\theta$ of greater than or equal to 26.0° and less than or equal to 35.0°. A crystal phase having these peaks is called a first crystal phase. Lithium ion diffusion pathways occur easily in the crystal when a solid electrolyte material contains a first crystal phase. Thus, when a first crystal phase is present in the solid electrolyte material according to the first embodiment, the solid electrolyte material according to the first embodiment has high ion conductivity.

The crystal system of the first crystal phase belongs to the monoclinic systems. The term "monoclinic" in the present disclosure means a crystal phase that has a crystal structure similar to $Li_3InCl_6$ disclosed in ICSD (inorganic crystal structure database) Collection Code 89617 and has an X-ray diffraction pattern unique to this structure. In the present disclosure, "having a similar crystal structure" means that the crystals are classified into the same space group and have atomic arrangement structures similar to one another; the phrase does not limit the lattice constants. The relative intensity ratio and the diffraction angles of the diffraction peaks in the X-ray diffraction pattern of the solid electrolyte material according to the first embodiment may differ from the diffraction pattern of $Li_3InCl_6$.

The X-ray diffraction pattern of the solid electrolyte material according to the first embodiment obtained by X-ray diffractometry using Cu-K$\alpha$ radiation may have at least one peak in the range of diffraction angles $2\theta$ of greater than or equal to 22.0° and less than or equal to 23.5°, at least two peaks in the range of diffraction angles $2\theta$ of greater than or equal to 31.0° and less than or equal to 35.0°, and at least one peak in the range of diffraction angles $2\theta$ of greater than or equal to 40.0° and less than or equal to 42.0°. A crystal phase having these peaks is called a second crystal phase. Lithium ion diffusion pathways occur easily in the crystal when a solid electrolyte material contains a second crystal phase. Thus, when a second crystal phase is present in the solid electrolyte material according to the first embodiment, the solid electrolyte material according to the first embodiment has high ion conductivity.

The crystal system of the second crystal phase belongs to the orthorhombic systems. The term "orthorhombic" in the present disclosure means a crystal phase that has a crystal structure similar to $Li_3YbCl_6$ disclosed in ICSD Collection Code 50152 and has an X-ray diffraction pattern unique to this structure. The relative intensity ratio and the diffraction angles of the diffraction peaks in the X-ray diffraction pattern of the solid electrolyte material according to the first embodiment may differ from the diffraction pattern of $Li_3YbCl_6$.

The X-ray diffraction pattern of the solid electrolyte material according to the first embodiment obtained by X-ray diffractometry using Cu-K$\alpha$ radiation may have at least two peaks in the range of diffraction angles $2\theta$ of greater than or equal to 21.0° and less than or equal to 24.0°, at least two peaks in the range of diffraction angles $2\theta$ of greater than or equal to 31.0° and less than or equal to 35.0°, and at least one peak in the range of diffraction angles $2\theta$ of greater than or equal to 40.0° and less than or equal to 42.0°. A crystal phase having these peaks is called a third crystal phase. Lithium ion diffusion pathways occur easily in the crystal when a solid electrolyte material contains a third crystal phase. Thus, when a third crystal phase is present in the solid electrolyte material according to the first embodiment, the solid electrolyte material according to the first embodiment has high ion conductivity.

The crystal system of the third crystal phase belongs to the trigonal systems. The term "trigonal" in the present disclosure means a crystal phase that has a crystal structure similar to $Li_3ErCl_6$ disclosed in ICSD Collection Code 50151 and has an X-ray diffraction pattern unique to this structure. The relative intensity ratio and the diffraction angles of the diffraction peaks in the X-ray diffraction pattern of the solid electrolyte material according to the first embodiment may differ from the diffraction pattern of $Li_3ErCl_6$.

The solid electrolyte material according to the first embodiment may further contain a fourth crystal phase different from the first, the second, and the third crystal phases. That is, the solid electrolyte material according to the first embodiment may further contain a fourth crystal phase that shows distinct peaks outside the ranges of the diffraction angle $2\theta$ described above. For example, the fourth crystal phase may be one belonging to the spinel structures. For example, the spinel structure may be a similar structure to $Li_2ZnCl_4$ disclosed in ICSD Collection Code 202743.

In order to increase ion conductive properties of the solid electrolyte material, the solid electrolyte material according to the first embodiment may be such that M is at least one selected from the group consisting of Y, Tb, Gd, Sm, and In. In order to further increase ion conductive properties of the solid electrolyte material, the solid electrolyte material according to the first embodiment may be such that M is at least one selected from the group consisting of Y, Tb, Gd, and Sm.

In order to increase ion conductive properties of the solid electrolyte material, the solid electrolyte material according to the first embodiment may be such that X is at least one selected from the group consisting of Cl, Br, and I.

The solid electrolyte material according to the first embodiment may be a material represented by the following compositional formula (2):

$$Li_{6-3a}(Yb_{1-b}M_b)_aCl_{6-x-y}Br_xI_y \cdots \qquad (2)$$

Here, the formula satisfies the following five relations:

$$0.5 \leq a \leq 1.5,$$

$$0 < b < 1,$$

$$0 \leq x \leq 6,$$

$$0 \leq y \leq 3,$$

and
$0 \leq x + y \leq 6$. The material represented by the compositional formula (2) has high ion conductivity.

In order to increase ion conductive properties of the solid electrolyte material, the compositional formula (2) may satisfy the following five relations:

$$1 \leq a \leq 1.1,$$

$$0 < b < 1,$$

$$0 \leq x \leq 6,$$

$$0 \leq y \leq 2,$$

and

$$0 \leq x + y \leq 6.$$

In order to increase ion conductive properties of the solid electrolyte material, the compositional formula (2) may satisfy $1 \leq a \leq 1.1$. In order to further increase ion conductive properties of the solid electrolyte material, the compositional formula (2) may satisfy a = 1.

The upper limit and the lower limit of the range of b in the compositional formula (2) may be defined by a combination of any numbers selected from greater than 0 (that is, 0 < b), 0.1, 0.2, 0.3, 0.4, 0.5, 0.7, 0.9, and less than 1 (that is, b < 1).

The upper limit and the lower limit of the range of x in the compositional formula (2) may be defined by a combination of any numbers selected from 0, 1, 1.5, 2, 3, and 6.

In order to increase ion conductive properties of the solid electrolyte material, the compositional formula (2) may satisfy 0 < x < 6.

The upper limit and the lower limit of the range of y in the compositional formula (2) may be defined by a combination of any numbers selected from 0, 0.5, 1, and 2.

In order to increase ion conductive properties of the solid electrolyte material, the compositional formula (1) may satisfy $0 \leq y \leq 2$. In order to further increase ion conductive properties of the solid electrolyte material, the compositional formula (1) may satisfy y = 1.

An X-ray diffraction pattern of the solid electrolyte material according to the first embodiment may be obtained by $\theta$-$2\theta$ X-ray diffractometry using Cu-K$\alpha$ radiation (1.5405 Å and 1.5444 Å wavelengths, that is, 0.15405 nm and 0.15444 nm wavelengths). The X-ray diffraction pattern obtained may have at least one peak in the range of diffraction angles $2\theta$ of greater than or equal to 13.0° and less than or equal to 15.0°, and at least two peaks in the range of diffraction angles $2\theta$ of greater than or equal to 26.0° and less than or equal to 35.0°. A crystal phase having these peaks is called a fifth crystal phase. Lithium ion diffusion pathways occur easily in the crystal when a solid electrolyte material contains a fifth crystal phase. Thus, when a fifth crystal phase is present in the solid electrolyte material according to the first embodiment, the solid electrolyte material according to the first embodiment has high ion conductivity.

The crystal system of the fifth crystal phase belongs to the monoclinic systems.

The X-ray diffraction pattern of the solid electrolyte material according to the first embodiment obtained by X-ray diffractometry using Cu-K$\alpha$ radiation may have at least two peaks in the range of diffraction angles $2\theta$ of greater

than or equal to 20.5° and less than or equal to 24.0°, at least two peaks in the range of diffraction angles 2θ of greater than or equal to 30.0° and less than or equal to 35.0°, and at least one peak in the range of diffraction angles 2θ of greater than or equal to 39.0° and less than or equal to 42.0°. A crystal phase having these peaks is called a sixth crystal phase. Lithium ion diffusion pathways occur easily in the crystal when a solid electrolyte material contains a sixth crystal phase. Thus, when a sixth crystal phase is present in the solid electrolyte material according to the first embodiment, the solid electrolyte material according to the first embodiment has high ion conductivity.

The crystal system of the sixth crystal phase belongs to the trigonal systems.

The solid electrolyte material according to the first embodiment may further contain a seventh crystal phase different from the fifth and the sixth crystal phases. That is, the solid electrolyte material according to the first embodiment may further contain a seventh crystal phase that shows distinct peaks outside the ranges of the diffraction angle 2θ described above. For example, the seventh crystal phase may be one belonging to the crystal structures similar to $Li_3YbCl_6$ disclosed in ICSD Collection Code 50152 or the crystal structures similar to $LiGdCl_4$ disclosed in ICSD Collection Code 38326.

In order to increase ion conductive properties of the solid electrolyte material, the solid electrolyte material according to the first embodiment may be such that M is at least one selected from the group consisting of Zr and Hf.

In order to increase ion conductive properties of the solid electrolyte material, the solid electrolyte material according to the first embodiment may be such that X is at least one selected from the group consisting of Cl, Br, and I.

The solid electrolyte material according to the first embodiment may be a material represented by the following compositional formula (3):

$$Li_{6-3a-4b}Yb_aM_bCl_{6-x-y}Br_xI_y \cdots \qquad (3)$$

Here, the formula satisfies the following six relations:

$$0 < a < 1.5,$$

$$0 < b < 1.5,$$

$$0 < 3a + 4b < 6,$$

$$0 \le x \le 6,$$

$$0 \le y \le 3,$$

and

$0 \le x + y \le 6$. The material represented by the compositional formula (3) has high ion conductivity.

The upper limit and the lower limit of the range of a in the compositional formula (3) may be defined by a combination of any numbers selected from greater than 0 (that is, $0 < a$), 0.1, 0.3, 0.4, 0.5, 0.55, 0.6, 0.7, 0.8, 0.9, and less than 1 (that is, $a < 1$).

In order to increase ion conductive properties of the solid electrolyte material, the compositional formula (3) may satisfy $0 < a < 1$.

The upper limit and the lower limit of the range of b in the compositional formula (3) may be defined by a combination of any numbers selected from greater than 0 (that is, $0 < b$), 0.1, 0.3, 0.35, 0.4, 0.45, 0.5, 0.6, 0.9, and less than 1 (that is, $b < 1$).

In order to increase ion conductive properties of the solid electrolyte material, the compositional formula (3) may satisfy $0 < b < 1$.

The upper limit and the lower limit of the range of x in the compositional formula (3) may be defined by a combination of any numbers selected from 0, 1, 2, 3, 4, and 6.

In order to increase ion conductive properties of the solid electrolyte material, the compositional formula (3) may satisfy $0 \le x \le 3$.

The upper limit and the lower limit of the range of y in the compositional formula (3) may be defined by a combination of any numbers selected from 0, 1, and 2.

In order to increase ion conductive properties of the solid electrolyte material, the compositional formula (3)

may satisfy $0 \le y \le 2$. In order to increase ion conductive properties of the solid electrolyte material, the compositional formula (3) may satisfy $y > 0$.

In order to increase ion conductive properties of the solid electrolyte material, the compositional formula (3) may satisfy $a \le 0.7$ and $b \ge 0.3$.

In order to increase ion conductive properties of the solid electrolyte material, the compositional formula (3) may satisfy $a = 0.5$ and $b = 0.5$.

In order to increase ion conductive properties of the solid electrolyte material, the compositional formula (3) may satisfy the following six relations:

$$0 < a < 1.5,$$

$$0 < b < 1.5,$$

$$0 < 3a + 4b < 6,$$

$$0 \le x \le 6,$$

$$0 \le y \le 3,$$

and

$$0 \le x + y \le 6.$$

An X-ray diffraction pattern of the solid electrolyte material according to the first embodiment may be obtained by $\theta$-$2\theta$ X-ray diffractometry using Cu-K$\alpha$ radiation (1.5405 Å and 1.5444 Å wavelengths, that is, 0.15405 nm and 0.15444 nm wavelengths). The X-ray diffraction pattern obtained may have at least one peak in the range of diffraction angles $2\theta$ of greater than or equal to 14.0° and less than or equal to 18.0°, at least one peak in the range of diffraction angles $2\theta$ of greater than or equal to 29.0° and less than or equal to 35.0°, and at least one peak in the range of diffraction angles $2\theta$ of greater than or equal to 48.0° and less than or equal to 52.0°. A crystal phase having these peaks is called an eighth crystal phase. Lithium ion diffusion pathways occur easily in the crystal when a solid electrolyte material contains an eighth crystal phase. Thus, when a first crystal phase is present in the solid electrolyte material according to the first embodiment, the solid electrolyte material according to the first embodiment has high ion conductivity.

The X-ray diffraction pattern of the solid electrolyte material according to the first embodiment obtained by X-ray diffractometry using Cu-K$\alpha$ radiation may have at least two peaks in the range of diffraction angles $2\theta$ of greater than or equal to 26.0° and less than or equal to 35.0°, and at least one peak in the range of diffraction angles $2\theta$ of greater than or equal to 13.0° and less than or equal to 17.0°. A crystal phase having these peaks is called a ninth crystal phase. Lithium ion diffusion pathways occur easily in the crystal when a solid electrolyte material contains a second crystal phase. Thus, when a ninth crystal phase is present in the solid electrolyte material according to the first embodiment, the solid electrolyte material according to the first embodiment has high ion conductivity.

The solid electrolyte material according to the first embodiment may further contain a tenth crystal phase different from the eighth and the ninth crystal phases. That is, the solid electrolyte material according to the first embodiment may further contain a tenth crystal phase that shows distinct peaks outside the ranges of the diffraction angle $2\theta$ described above.

In order to increase ion conductive properties of the solid electrolyte material, the solid electrolyte material according to the first embodiment may be such that M includes M1 and M2, M1 is at least one selected from the group consisting of Y, Tb, Gd, Sm, and In, and M2 is at least one selected from the group consisting of Mg, Ca, Sr, Ba, and Zn.

In order to increase ion conductive properties of the solid electrolyte material, the solid electrolyte material according to the first embodiment may be such that M1 is one selected from the group consisting of Y, Tb, Gd, and Sm.

In order to increase ion conductive properties of the solid electrolyte material, the solid electrolyte material according to the first embodiment may be such that M2 is at least one selected from the group consisting of Mg, Ca, Sr, and Zn. M2 may be at least one selected from the group consisting of Mg, Sr, and Zn.

In order to increase ion conductive properties of the solid electrolyte material, the solid electrolyte material according to the first embodiment may be such that X is at least one selected from the group consisting of Cl and Br.

The solid electrolyte material according to the first embodiment may be a material represented by the following compositional formula (4): $Li_{6-3a-3b-2}Yb_aM1_bM2_cCl_{6-x}Br_x \cdots (4)$

Here, the formula satisfies the following four relations:

$$0.3 \leq a \leq 1.2,$$

$$0 < b \leq 0.5,$$

$$0 < c \leq 0.4,$$

and $0 \leq x \leq 6$. The material represented by the compositional formula (4) has high ion conductivity.

In order to increase ion conductive properties of the solid electrolyte material, the compositional formula (4) may satisfy the following four relations:

$$0.65 \leq a < 1,$$

$$0 < b \leq 0.3,$$

$$0 < c \leq 0.2,$$

and

$$0 \leq x \leq 6.$$

The upper limit and the lower limit of the range of a in the compositional formula (4) may be defined by a combination of any numbers selected from 0.65, 0.7, 0.8, and less than 1 (that is, $a \leq 1$).

In order to increase ion conductive properties of the solid electrolyte material, the compositional formula (4) may satisfy $0.65 \leq a < 1$.

The upper limit and the lower limit of the range of b in the compositional formula (4) may be defined by a combination of any numbers selected from greater than 0 (that is, $0 < b$), 0.1, 0.2, 0.25, and 0.3.

In order to increase ion conductive properties of the solid electrolyte material, the compositional formula (4) may satisfy $0 < b \leq 0.3$.

The upper limit and the lower limit of the range of c in the compositional formula (4) may be defined by a combination of any numbers selected from greater than 0 (that is, $0 < c$), 0.05, 0.1, 0.15, and 0.2.

In order to increase ion conductive properties of the solid electrolyte material, the compositional formula (4) may satisfy $0 < c \leq 0.2$. In order to further increase ion conductive properties of the solid electrolyte material, the compositional formula (4) may satisfy $0 < c \leq 0.1$.

The upper limit and the lower limit of the range of x in the compositional formula (4) may be defined by a combination of any numbers selected from 0, 1, 3, and 6.

In order to increase ion conductive properties of the solid electrolyte material, the compositional formula (4) may satisfy $0 \leq x \leq 3$.

An X-ray diffraction pattern of the solid electrolyte material according to the first embodiment may be obtained by $\theta$-$2\theta$ X-ray diffractometry using Cu-K$\alpha$ radiation (1.5405 Å and 1.5444 Å wavelengths, that is, 0.15405 nm and 0.15444 nm wavelengths). The X-ray diffraction pattern obtained may have at least one peak in the range of diffraction angles $2\theta$ of greater than or equal to 13.0° and less than or equal to 15.0°, and at least two peaks in the range of diffraction angles $2\theta$ of greater than or equal to 26.0° and less than or equal to 35.0°. A crystal phase having these peaks is called an eleventh crystal phase. Lithium ion diffusion pathways occur easily in the crystal when a solid electrolyte material contains an eleventh crystal phase. Thus, when an eleventh crystal phase is present in the solid electrolyte material according to the first embodiment, the solid electrolyte material according to the first embodiment has high ion conductivity.

The crystal system of the eleventh crystal phase belongs to the monoclinic systems.

The X-ray diffraction pattern of the solid electrolyte material according to the first embodiment obtained by X-ray diffractometry using Cu-K$\alpha$ radiation may have at least two peaks in the range of diffraction angles $2\theta$ of greater than or equal to 20.5° and less than or equal to 24.0°, at least two peaks in the range of diffraction angles $2\theta$ of greater than or equal to 30.0° and less than or equal to 35.0°, and at least one peak in the range of diffraction angles $2\theta$ of greater than or equal to 39.0° and less than or equal to 42.0°. A crystal phase having these peaks is called a twelfth crystal phase. Lithium ion diffusion pathways occur easily in the crystal when a solid electrolyte material contains a twelfth crystal phase. Thus, when a twelfth crystal phase is present in the solid electrolyte material according to the first embodiment, the solid electrolyte material according to the first embodiment has high ion conductivity.

The crystal system of the twelfth crystal phase belongs to the trigonal systems.

The solid electrolyte material according to the first embodiment may further contain a thirteenth crystal phase different from the eleventh and the twelfth crystal phases. That is, the solid electrolyte material according to the first embodiment may further contain a thirteenth crystal phase that shows distinct peaks outside the ranges of the diffraction angle $2\theta$ described above. For example, the thirteenth crystal phase may be one belonging to the crystal structures similar to $Li_3YbCl_6$ disclosed in ICSD Collection Code 50152 or the crystal structures similar to $LiGdCl_4$ disclosed in ICSD Collection Code 38326.

The solid electrolyte material according to the first embodiment may be crystalline or amorphous. Furthermore, the solid electrolyte material according to the first embodiment may be a mixture of crystalline and amorphous forms. Here, the term crystalline means that the material gives rise to peaks in an X-ray diffraction pattern. The term amorphous means that the material shows a broad peak (namely, a halo) in an X-ray diffraction pattern. When the material is a mixture of amorphous and crystalline forms, the X-ray diffraction pattern contains peaks and a halo.

The shape of the solid electrolyte material according to the first embodiment is not limited. Examples of the shapes include acicular, spherical, and ellipsoidal. The solid electrolyte material according to the first embodiment may be particles. The solid electrolyte material according to the first embodiment may be formed to have a pellet or plate shape.

When, for example, the solid electrolyte material according to the first embodiment is particles (for example, spherical particles), the solid electrolyte material may have a median diameter of greater than or equal to 0.1 $\mu$m and less than or equal to 100 $\mu$m. The median diameter means the particle size at 50% cumulative volume in the volume-based grain size distribution. For example, the volume-based grain size distribution is measured with a laser diffraction measurement device or an image analyzer.

The solid electrolyte material according to the first embodiment may have a median diameter of greater than or equal to 0.5 $\mu$m and less than or equal to 10 $\mu$m. Such a solid electrolyte material according to the first embodiment has higher ion conductive properties. Furthermore, such a median diameter ensures that when the solid electrolyte material according to the first embodiment is mixed with an additional material, such as an active material, a good dispersion condition is achieved between the solid electrolyte material according to the first embodiment and the additional material.

<Methods for Producing Solid Electrolyte Materials>

For example, the solid electrolyte material according to the first embodiment is produced by the following method.

Two or more halides as ingredient powders are mixed so as to have a desired composition.

When, for example, the desired composition is $Li_{3.15}Yb_{0.85}Mg_{0.15}Cl_6$, a LiCl ingredient powder, a $YbCl_3$ ingredient powder, and a $MgCl_2$ ingredient powder (three ingredient halide powders) are mixed so that the molar ratio will be approximately 3.15:0.85:0.15. The ingredient powders may be mixed in a molar ratio controlled beforehand to compensate for compositional changes expected in the synthesis process.

The mixture of the ingredient powders is heat-treated in an inert gas atmosphere and is reacted to give a reaction product. Examples of the inert gases that may be used include helium, nitrogen, and argon. The heat treatment step may be performed in vacuum. In the heat treatment step, the powder of the mixed materials may be placed in a container (for example, a crucible or a sealed tube) and may be heat-treated in a heating furnace.

Alternatively, the ingredient powders may be reacted with one another mechanochemically (that is, by a mechanochemical milling method) in a mixing device, such as a planetary ball mill, to give a reaction product. The mechanochemically obtained reaction product may be further heat-treated in an inert gas atmosphere or in vacuum.

The solid electrolyte material according to the first embodiment is obtained by the methods described above.

(Second Embodiment)

The second embodiment of the present disclosure will be described hereinbelow. The description of features described in the first embodiment may be omitted.

The second embodiment describes a battery that uses the solid electrolyte material according to the first embodiment.

The battery according to the second embodiment includes a positive electrode, a negative electrode, and an electrolyte layer. The electrolyte layer is disposed between the positive electrode and the negative electrode. At least one selected from the group consisting of the positive electrode, the electrolyte layer, and the negative electrode contains the solid electrolyte material according to the first embodiment.

The battery according to the second embodiment has excellent charge-discharge characteristics because of its containing the solid electrolyte material according to the first embodiment. The battery may be an all-solid-state battery.

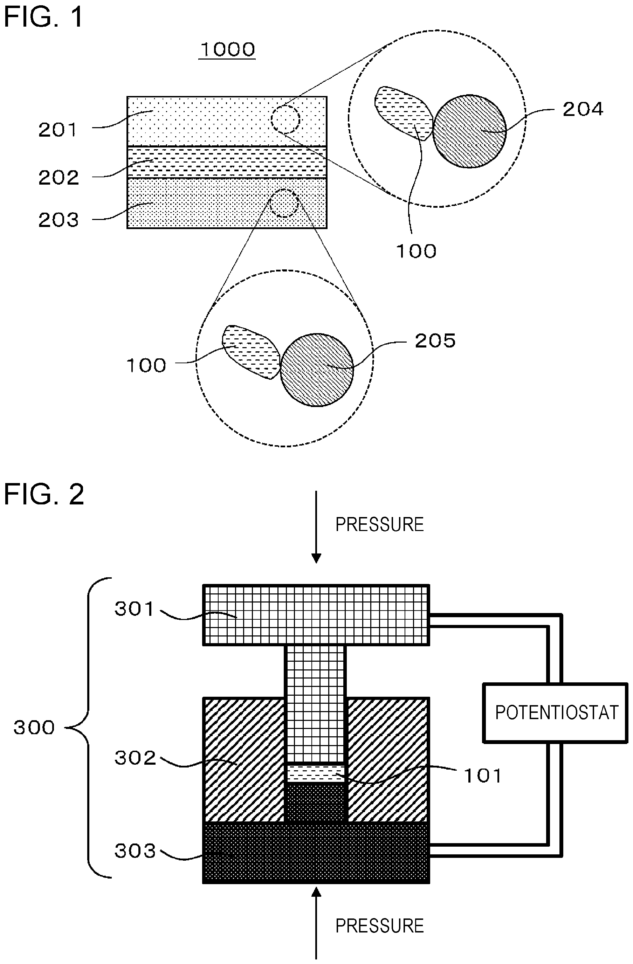

Fig. 1 illustrates a sectional view of a battery 1000 according to the second embodiment.

The battery 1000 according to the second embodiment includes a positive electrode 201, an electrolyte layer 202, and a negative electrode 203. The electrolyte layer 202 is disposed between the positive electrode 201 and the negative electrode 203.

The positive electrode 201 contains positive electrode active material particles 204 and solid electrolyte particles 100.

The electrolyte layer 202 contains an electrolyte material. For example, the electrolyte material is a solid electrolyte material.

The negative electrode 203 contains negative electrode active material particles 205 and solid electrolyte particles 100.

The solid electrolyte particles 100 are particles including the solid electrolyte material according to the first embodiment. The solid electrolyte particles 100 may be particles made of the solid electrolyte material according to the first embodiment or may be particles containing the solid electrolyte material according to the first embodiment as a main component. Here, the phrase that the particles contain the solid electrolyte material according to the first embodiment as a main component means that the solid electrolyte material according to the first embodiment represents the largest molar ratio among the components in the particles.

The solid electrolyte particles 100 may have a median diameter of greater than or equal to 0.1 $\mu$m and less than or equal to 100 $\mu$m or may have a median diameter of greater than or equal to 0.5 $\mu$m and less than or equal to 10 $\mu$m. In this case, the solid electrolyte particles 100 have higher ion conductive properties.

The positive electrode 201 contains a material capable of occluding and releasing metal ions (for example, lithium ions). For example, the material is a positive electrode active material (for example, the positive electrode active material particles 204).

Examples of the positive electrode active materials include lithium-containing transition metal oxides, transition metal fluorides, polyanion materials, fluorinated polyanion materials, transition metal sulfides, transition metal oxyfluorides, transition metal oxysulfides, and transition metal oxynitrides. Examples of the lithium-containing transition metal oxides include $Li(Ni, Co, Al)O_2$ and $LiCoO_2$.

In the present disclosure, the notation "(A, B, C)" in a chemical formula means "at least one selected from the group consisting of A, B, and C". For example, "(Ni, Co, Al)" is synonymous with "at least one selected from the group consisting of Ni, Co, and Al".

The positive electrode active material particles 204 may have a median diameter of greater than or equal to 0.1 $\mu$m and less than or equal to 100 $\mu$m. When the positive electrode active material particles 204 have a median diameter of greater than or equal to 0.1 $\mu$m, the positive electrode active material particles 204 and the solid electrolyte particles 100 may be well dispersed in the positive electrode 201. As a result, charge-discharge characteristics of the battery are enhanced. When the positive electrode active material particles 204 have a median diameter of less than or equal to 100 $\mu$m, the lithium diffusion rate in the positive electrode active material particles 204 is enhanced. Consequently, the battery may be operated at a high output.

The positive electrode active material particles 204 may have a median diameter larger than that of the solid electrolyte particles 100. With this configuration, the positive electrode active material particles 204 and the solid electrolyte particles 100 may be well dispersed in the positive electrode 201.

In order to increase the energy density and the output of the battery, the ratio of the volume of the positive electrode active material particles 204 to the total of the volume of the positive electrode active material particles 204 and the volume of the solid electrolyte particles 100 in the positive electrode 201 may be greater than or equal to 0.30 and less than or equal to 0.95.

In order to increase the energy density and the output of the battery, the positive electrode 201 may have a thickness of greater than or equal to 10 $\mu$m and less than or equal to 500 $\mu$m.

The electrolyte layer 202 contains an electrolyte material. For example, the electrolyte material is the solid electrolyte material according to the first embodiment. The electrolyte layer 202 may be a solid electrolyte layer.

The electrolyte layer 202 may be composed solely of the solid electrolyte material according to the first embodiment. Alternatively, the electrolyte layer 202 may be composed solely of a solid electrolyte material different from the solid electrolyte material according to the first embodiment.

Examples of the solid electrolyte materials different from the solid electrolyte materials according to the first embodiment include $Li_2MgX'_4$, $Li_2FeX'_4$, $Li(Al, Ga, In)X'_4$, $Li_3(Al, Ga, In)X'_6$, and LiI. Here, X' is at least one selected from the group consisting of F, Cl, Br, and I. That is, the solid electrolyte material different from the solid electrolyte material according to the first embodiment may be a solid electrolyte including a halogen element, namely, a halide solid electrolyte.

Hereinafter, the solid electrolyte material according to the first embodiment will be written as the first solid electrolyte material. The solid electrolyte material different from the solid electrolyte material according to the first embodiment will be written as the second solid electrolyte material.

The electrolyte layer 202 may contain not only the first solid electrolyte material but also the second solid electrolyte material. In the electrolyte layer 202, the first solid electrolyte material and the second solid electrolyte material may be uniformly dispersed. A layer made of the first solid electrolyte material and a layer made of the second solid electrolyte material may be stacked along the stacking direction of the battery 1000.

The electrolyte layer 202 may have a thickness of greater than or equal to 1 $\mu$m and less than or equal to 1000 $\mu$m. When the electrolyte layer 202 has a thickness of greater than or equal to 1 $\mu$m, the positive electrode 201 and the negative electrode 203 are unlikely to be short-circuited. When the electrolyte layer 202 has a thickness of less than or equal to 1000 $\mu$m, the battery may be operated at a high output.

The negative electrode 203 contains a material capable of occluding and releasing metal ions, such as lithium ions. For example, the material is a negative electrode active material (for example, the negative electrode active material particles 205).

Examples of the negative electrode active materials include metal materials, carbon materials, oxides, nitrides, tin compounds, and silicon compounds. The metal materials may be elemental metals or alloys. Examples of the metal materials include lithium metal and lithium alloys. Examples of the carbon materials include natural graphites, cokes, semi-graphitized carbons, carbon fibers, spherical carbons, artificial graphites, and amorphous carbons. From the point of view of capacitance density, for example, silicon (that is, Si), tin (that is, Sn), silicon compounds, and tin compounds are preferable as the negative electrode active materials.

The negative electrode active material particles 205 may have a median diameter of greater than or equal to 0.1 $\mu$m and less than or equal to 100 $\mu$m. When the negative electrode active material particles 205 have a median diameter of greater than or equal to 0.1 $\mu$m, the negative electrode active material particles 205 and the solid electrolyte particles 100 may be well dispersed in the negative electrode 203. As a result, charge-discharge characteristics of the battery are enhanced. When the negative electrode active material particles 205 have a median diameter of less than or equal to 100 $\mu$m, the lithium diffusion rate in the negative electrode active material particles 205 is enhanced. Consequently, the battery may be operated at a high output.

The negative electrode active material particles 205 may have a median diameter larger than that of the solid electrolyte particles 100. With this configuration, the negative electrode active material particles 205 and the solid electrolyte particles 100 may be well dispersed in the negative electrode 203.

In order to increase the energy density and the output of the battery, the ratio of the volume of the negative electrode active material particles 205 to the total of the volume of the negative electrode active material particles 205 and the volume of the solid electrolyte particles 100 in the negative electrode 203 may be greater than or equal to 0.30 and less than or equal to 0.95.

In order to increase the energy density and the output of the battery, the negative electrode 203 may have a thickness of greater than or equal to 10 $\mu$m and less than or equal to 500 $\mu$m.

At least one selected from the group consisting of the positive electrode 201, the electrolyte layer 202, and the negative electrode 203 may contain the second solid electrolyte material for the purpose of enhancing ion conductive properties, chemical stability, and electrochemical stability.

As already described, the second solid electrolyte material may be a halide solid electrolyte.

Examples of the halide solid electrolytes include $Li_2MgX'_4$, $Li_2FeX'_4$, $Li(Al, Ga, In)X'_4$, $Li_3(Al, Ga, In)X'_6$, and LiI. Here, X' is at least one selected from the group consisting of F, Cl, Br, and I.

Examples of the halide solid electrolytes further include compounds represented by $Li_pMe_qY_rZ_6$. Here, $p + m'q + 3r = 6$ and $r > 0$ are satisfied. Me is at least one element selected from the group consisting of metal elements other than Li and Y, and metalloid elements. The value of m' indicates the valence of Me. Z is at least one selected from the group consisting of F, Cl, Br, and I. The "metalloid elements" are B, Si, Ge, As, Sb, and Te. The "metal elements" are all the elements in Groups 1 to 12 of the periodic table (except hydrogen), and all the elements in Groups 13 to 16 of the periodic table (except B, Si, Ge, As, Sb, Te, C, N, P, O, S, and Se). In order to increase the ion conductivity of the halide solid electrolyte, Me may be at least one selected from the group consisting of Mg, Ca, Sr, Ba, Zn, Sc, Al, Ga, Bi, Zr, Hf, Ti, Sn, Ta, and Nb.

The second solid electrolyte material may be a sulfide solid electrolyte.

Examples of the sulfide solid electrolytes include $Li_2S-P_2S_5$, $Li_2S-SiS_2$, $Li_2S-B_2S_3$, $Li_2S-GeS_2$,

$Li_{3.25}Ge_{0.25}P_{0.75}S_4$, and $Li_{10}GeP_2Si_2$.

The second solid electrolyte material may be an oxide solid electrolyte.

Examples of the oxide solid electrolytes include:

(i) NASICON-type solid electrolytes, such as $LiTi_2(PO_4)_3$ and element-substituted derivatives thereof,
(ii) perovskite-type solid electrolytes, such as $(LaLi)TiO_3$,
(iii) LISICON-type solid electrolytes, such as $Li_{14}ZnGe_4O_{16}$, $Li_4SiO_4$, $LiGeO_4$, and element-substituted derivatives thereof,
(iv) garnet-type solid electrolytes, such as $Li_7La_3Zr_2O_{12}$ and element-substituted derivatives thereof, and
(v) $Li_3PO_4$ and N-substituted derivatives thereof.

The second solid electrolyte material may be an organic polymer solid electrolyte.

Examples of the organic polymer solid electrolytes include polymer compounds and compounds of lithium salts.

The polymer compounds may have an ethylene oxide structure. The polymer compounds having an ethylene oxide structure can contain a large amount of a lithium salt, and thus the ion conductivity may be further increased.

Examples of the lithium salts include $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. A single kind of a lithium salt selected from these may be used singly. Alternatively, a mixture of two or more kinds of lithium salts selected from the above may be used.

At least one selected from the group consisting of the positive electrode 201, the electrolyte layer 202, and the negative electrode 203 may contain a nonaqueous electrolytic solution, a gel electrolyte, or an ionic liquid for the purposes of facilitating the transfer of lithium ions and enhancing output characteristics of the battery.

The nonaqueous electrolytic solution includes a nonaqueous solvent and a lithium salt dissolved in the nonaqueous solvent.

Examples of the nonaqueous solvents include cyclic carbonate ester solvents, chain carbonate ester solvents, cyclic ether solvents, chain ether solvents, cyclic ester solvents, chain ester solvents, and fluorine solvents. Examples of the cyclic carbonate ester solvents include ethylene carbonate, propylene carbonate, and butylene carbonate. Examples of the chain carbonate ester solvents include dimethyl carbonate, ethyl methyl carbonate, and diethyl carbonate. Examples of the cyclic ether solvents include tetrahydrofuran, 1,4-dioxane, and 1,3-dioxolane. Examples of the chain ether solvents include 1,2-dimethoxyethane and 1,2-diethoxyethane. Examples of the cyclic ester solvents include $\gamma$-butyrolactone. Examples of the chain ester solvents include methyl acetate. Examples of the fluorine solvents include fluoroethylene carbonate, methyl fluoropropionate, fluorobenzene, fluoroethyl methyl carbonate, and fluorodimethylene carbonate. A single kind of a nonaqueous solvent selected from these may be used singly. Alternatively, a mixture of two or more kinds of nonaqueous solvents selected from the above may be used.

Examples of the lithium salts include $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. A single kind of a lithium salt selected from these may be used singly. Alternatively, a mixture of two or more kinds of lithium salts selected from the above may be used. For example, the concentration of the lithium salt is greater than or equal to 0.5 mol/L and less than or equal to 2 mol/L.

The gel electrolyte may be a polymer material impregnated with a nonaqueous electrolytic solution. Examples of the polymer materials include polyethylene oxide, polyacrylonitrile, polyvinylidene fluoride, polymethyl methacrylate, and polymers having ethylene oxide bonds.

Examples of the cations contained in the ionic liquids include:

(i) aliphatic chain quaternary salts, such as tetraalkyl ammoniums and tetraalkyl phosphoniums,
(ii) aliphatic cyclic ammoniums, such as pyrrolidiniums, morpholiniums, imidazoliniums, tetrahydropyrimidiniums, piperaziniums, and piperidiniums, and
(iii) nitrogen-containing heterocyclic aromatic cations, such as pyridiniums and imidazoliums.

Examples of the anions contained in the ionic liquids include $PF_6^-$, $BF_4^-$, $SbF_6^-$, $AsF_6^-$, $SO_3CF_3^-$, $N(SO_2CF_3)_2^-$, $N(SO_2C_2F_5)_2^-$, $N(SO_2CF_3)(SO_2C_4F_9)^-$; and $C(SO_2CF_3)_3^-$.

The ionic liquid may contain a lithium salt.

At least one selected from the group consisting of the positive electrode 201, the electrolyte layer 202, and the negative electrode 203 may contain a binder for the purpose of enhancing the adhesion between the particles.

Examples of the binders include polyvinylidene fluoride, polytetrafluoroethylene, polyethylene, polypropylene, aramid resins, polyamide, polyimide, polyamidimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyether sulfone, hexafluoropolypropylene, styrene butadiene rubber, and carboxymethylcellulose. Copolymers may also be used as the binders. Examples of such binders include copolymers of two or more kinds of materials selected from the group consisting of tetrafluoroethylene, hexafluoroethylene, hexafluoropropylene, perfluoroalkyl vinyl ethers, vinylidene fluoride, chlorotrifluoroethylene, ethylene, propylene, pentafluoropropylene, fluoromethyl vinyl ether, acrylic acid, and hexadiene. A mixture of two or more kinds of materials selected from the above may be used as the binder.

At least one selected from the positive electrode 201 and the negative electrode 203 may contain a conductive auxiliary for the purpose of enhancing the electron conductivity.

Examples of the conductive auxiliaries include:

(i) graphites, such as natural graphites and artificial graphites,
(ii) carbon blacks, such as acetylene blacks and Ketjen blacks,
(iii) conductive fibers, such as carbon fibers and metal fibers,
(iv) carbon fluoride,
(v) metal powders, such as aluminum,
(vi) conductive whiskers, such as zinc oxide and potassium titanate,
(vii) conductive metal oxides, such as titanium oxide, and
(viii) conductive polymer compounds, such as polyaniline, polypyrrole, and polythiophene. To reduce the cost, a conductive auxiliary belonging to (i) or (ii) may be used.

Examples of the shapes of the batteries according to the second embodiment include coin shapes, cylindrical shapes, prismatic shapes, sheet shapes, button shapes, flat shapes, and laminate shapes.

For example, the battery according to the second embodiment may be produced by providing materials for forming the positive electrode, materials for forming the electrolyte layer, and materials for forming the negative electrode, and fabricating a stack by a known method in which the positive electrode, the electrolyte layer, and the negative electrode are arranged in this order.

EXAMPLES

Hereinbelow, the present disclosure will be described in greater detail with reference to EXAMPLES A, B, C, and D.

Solid electrolyte materials of EXAMPLES A may be represented by the compositional formula (1) described hereinabove.

<EXAMPLE A1>

(Preparation of Solid Electrolyte Material)

In an argon atmosphere having a dew point of less than or equal to -60°C (hereinafter, written as "dry argon atmosphere"), LiCl, $YbCl_3$, and $MgCl_2$ as ingredient powders were provided in a molar ratio $LiCl:YbCl_3:MgCl_2$ = 3.15:0.85:0.15. These ingredient powders were crushed and mixed together in an agate mortar. The mixed powder obtained was placed into an alumina crucible and was heat-treated in a dry argon atmosphere at 600°C for 1 hour. The heat-treated product obtained was crushed in an agate mortar. A powder of a solid electrolyte material of EXAMPLE A1 was thus obtained. The solid electrolyte material of EXAMPLE A1 had a composition represented by $Li_{3.15}Yb_{0.85}Mg_{0.14}Cl_6$.

(Evaluation of Ion Conductivity)

Fig. 2 illustrates a schematic view of a pressure forming die 300 used to evaluate the ion conductivity of the solid electrolyte material.

The pressure forming die 300 included an upper punch 301, a die 302, and a lower punch 303. The upper punch 301 and the lower punch 303 were each formed of electronconductive stainless steel. The die 302 was formed of an insulating polycarbonate.

Using the pressure forming die 300 illustrated in Fig. 2, the ion conductivity of the solid electrolyte material of EXAMPLE A1 was evaluated by the following method.

In a dry argon atmosphere, the powder of the solid electrolyte material of EXAMPLE A1 was charged to fill the inside of the pressure forming die 300. Inside the pressure forming die 300, a pressure of 360 MPa was applied to the powder 101 of the solid electrolyte material of EXAMPLE A1 using the upper punch 301 and the lower punch 303.

While maintaining the pressure, the upper punch 301 and the lower punch 303 were connected to a potentiostat (Princeton Applied Research, Versa STAT 4) equipped with a frequency response analyzer. The upper punch 301 was connected to the working electrode and the potential measuring terminal. The lower punch 303 was connected to the counter electrode and the reference electrode. The impedance of the solid electrolyte material was measured at room temperature by an electrochemical impedance measurement method.

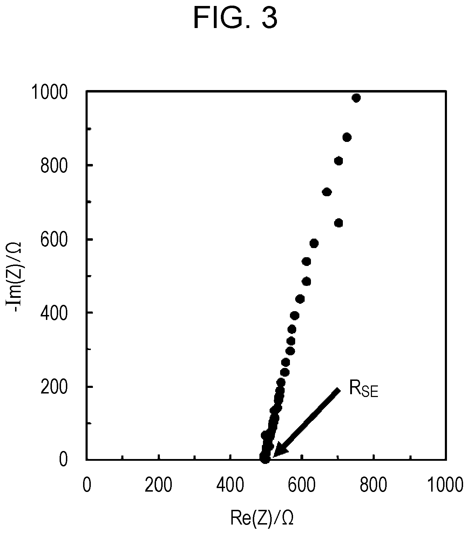

Fig. 3 is a graph illustrating the Cole-Cole plot obtained by the AC impedance measurement of the solid electrolyte material of EXAMPLE A1.

In Fig. 3, the real value of impedance at the measurement point where the absolute value of the complex impedance phase was smallest was taken as the value of resistance of the solid electrolyte material to ion conduction. For the real value, refer to the arrow $R_{SE}$ illustrated in Fig. 3. Using the resistance value, the ion conductivity was calculated based on the following equation (5).

$$\sigma = (R_{SE} \times S/t)^{-1} \cdots (5)$$

Here, $\sigma$ indicates the ion conductivity. S represents the area of contact between the solid electrolyte material and the upper punch 301. Specifically, S is equal to the sectional area of the hollow portion of the die 302 in Fig. 2. $R_{SE}$ indicates the resistance value of the solid electrolyte material in the impedance measurement. The letter t represents the thickness of the solid electrolyte material. Specifically, the letter t is equal to the thickness of the layer formed of the powder 101 of the solid electrolyte material in Fig. 2.

The ion conductivity of the solid electrolyte material of EXAMPLE A1 measured at 25°C was $1.24 \times 10^{-4}$ S/cm.

(X-Ray Diffractometry)

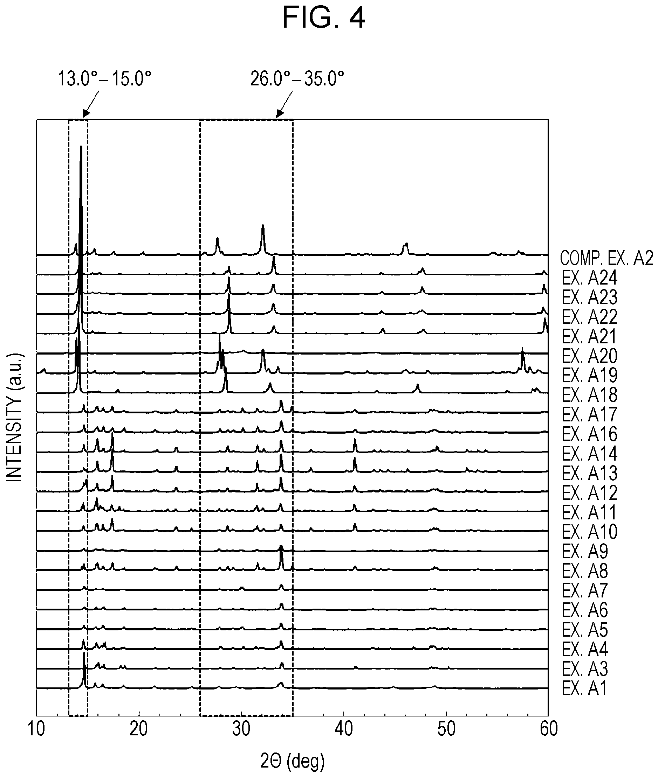

Fig. 4 is a graph illustrating an X-ray diffraction pattern of the solid electrolyte material of EXAMPLE A1. The results illustrated in Fig. 4 were measured by the following method.

The solid electrolyte material of EXAMPLE A1 was analyzed on an X-ray diffractometer (MiniFlex 600, Rigaku Corporation) in a dry environment having a dew point of less than or equal to -50°C to measure an X-ray diffraction pattern. The X-ray diffraction pattern was measured by a $\theta$-$2\theta$ method using Cu-K$\alpha$ radiation (1.5405 Å and 1.5444 Å wavelengths) as the X-ray source.

The X-ray diffraction pattern of the solid electrolyte material of EXAMPLE A1 had one peak in the range of greater than or equal to 13.0° and less than or equal to 15.0°, and three peaks in the range of greater than or equal to 26.0° and less than or equal to 35.0°. Thus, the solid electrolyte material of EXAMPLE A1 contained a first crystal phase (namely, a monoclinic crystal). The angles of the distinct X-ray diffraction peaks observed of the first crystal phase are described in Table 2.

(Fabrication of Battery)

In a dry argon atmosphere, the solid electrolyte material of EXAMPLE A1 and $LiCoO_2$ were provided in a volume ratio of 30:70. These materials were mixed together in a mortar to give a mixture.

In an insulating cylinder having an inner diameter of 9.5 mm, the solid electrolyte material (80 mg) of EXAMPLE A1 and the above mixture (10 mg) were stacked in this order. A pressure of 720 MPa was applied to the resultant stack to form a solid electrolyte layer made of the solid electrolyte material of EXAMPLE A1 and a positive electrode made of the mixture. The solid electrolyte layer had a thickness of 400 $\mu$m.

Next, metallic In (200 $\mu$m thick), metallic Li (200 $\mu$m thick), and metallic In (200 $\mu$m thick) were stacked sequentially onto the solid electrolyte layer. A pressure of 80 MPa was applied to the resultant stack to form a negative electrode.

Next, current collectors formed of stainless steel were attached to the positive electrode and the negative electrode, and current collector leads were attached to the current collectors.

Lastly, the inside of the insulating cylinder was isolated from the outside atmosphere with use of an insulating ferrule. The inside of the cylinder was thus sealed. A battery of EXAMPLE A1 was thus obtained.

(Charging-Discharging Test)

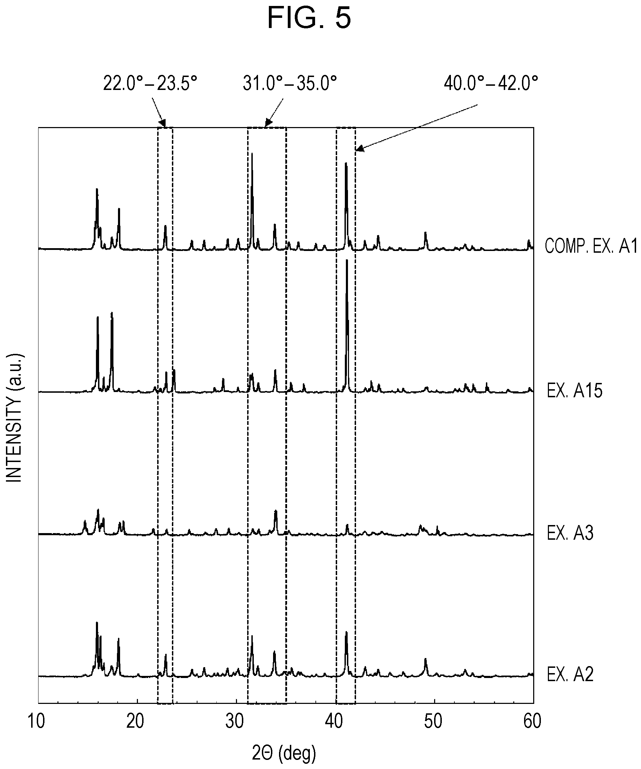

Fig. 5 is a graph illustrating initial discharge characteristics of the battery of EXAMPLE A1. Initial charge-discharge characteristics were measured by the following method.

The battery of EXAMPLE A1 was placed in a thermostatic chamber at 25°C.

The battery of EXAMPLE A1 was charged at a current density of 54 $\mu$A/cm$^2$ until the voltage reached 3.68 V. The current density corresponds to 0.05 C rate.

Next, the battery of EXAMPLE A1 was discharged at a current density of 54 $\mu$A/cm$^2$ until the voltage fell to 1.88 V.

As a result of the charging-discharging test, the battery of EXAMPLE A1 had an initial discharge capacity of 0.97 mAh.

<EXAMPLES A2 to A24>

(Preparation of Solid Electrolyte Materials)

In EXAMPLE A2, LiCl, $YbCl_3$, and $MgCl_2$ as ingredient powders were provided in a molar ratio of $LiCl:YbCl_3:MgCl_2 = 3.1:0.9:0.1$.

In EXAMPLE A3, LiCl, $YbCl_3$, and $ZnCl_2$ as ingredient powders were provided in a molar ratio of $LiCl:YbCl_3:ZnCl_2 = 3.1:0.9:0.1$.

In EXAMPLE A4, LiCl, $YbCl_3$, and $ZnCl_2$ as ingredient powders were provided in a molar ratio of $LiCl:YbCl_3:ZnCl_2 = 3.2:0.8:0.2$.

In EXAMPLE A5, LiCl, $YbCl_3$, and $ZnCl_2$ as ingredient powders were provided in a molar ratio of $LiCl:YbCl_3:ZnCl_2 = 3.3:0.7:0.3$.

In EXAMPLE A6, LiCl, $YbCl_3$, and $ZnCl_2$ as ingredient powders were provided in a molar ratio of $LiCl:YbCl_3:ZnCl_2 = 3.4:0.6:0.4$.

In EXAMPLE A7, LiCl, $YbCl_3$, and $ZnCl_2$ as ingredient powders were provided in a molar ratio of $LiCl:YbCl_3:ZnCl_2 = 3.5:0.5:0.5$.

In EXAMPLE A8, LiCl, $YbCl_3$, and $ZnCl_2$ as ingredient powders were provided in a molar ratio of $LiCl:YbCl_3:ZnCl_2 = 3.2:0.6:0.5$.

In EXAMPLE A9, LiCl, $YbCl_3$, and $ZnCl_2$ as ingredient powders were provided in a molar ratio of $LiCl:YbCl_3:ZnCl_2 = 3:0.6:0.6$.

In EXAMPLE A10, LiCl, $YbCl_3$, and $ZnCl_2$ as ingredient powders were provided in a molar ratio of $LiCl:YbCl_3:ZnCl_2 = 2.9:0.9:0.2$.

In EXAMPLE A11, LiCl, $YbCl_3$, and $ZnCl_2$ as ingredient powders were provided in a molar ratio of $LiCl:YbCl_3:ZnCl_2 = 2.6:1:0.2$.

In EXAMPLE A12, LiCl, $YbCl_3$, and $ZnCl_2$ as ingredient powders were provided in a molar ratio of $LiCl:YbCl_3:ZnCl_2 = 2.3:1.1:0.2$.

In EXAMPLE A13, LiCl, $YbCl_3$, and $ZnCl_2$ as ingredient powders were provided in a molar ratio of $LiCl:YbCl_3:ZnCl_2 = 2.7:1:0.15$.

In EXAMPLE A14, LiCl, $YbCl_3$, and $ZnCl_2$ as ingredient powders were provided in a molar ratio of $LiCl:YbCl_3:ZnCl_2 = 2.8:1:0.1$.

In EXAMPLE A15, LiCl, $YbCl_3$, and $ZnCl_2$ as ingredient powders were provided in a molar ratio of $LiCl:YbCl_3:ZnCl_2 = 2.9:1:0.05$.

In EXAMPLE A16, LiCl, $YbCl_3$, and $ZnCl_2$ as ingredient powders were provided in a molar ratio of $LiCl:YbCl_3:ZnCl_2 = 3.35:0.75:0.2$.

In EXAMPLE A17, LiCl, $YbCl_3$, and $ZnCl_2$ as ingredient powders were provided in a molar ratio of $LiCl:YbCl_3:ZnCl_2 = 3.5:0.7:0.2$.

In EXAMPLE A18, LiBr, $YbCl_3$, and $ZnBr_2$ as ingredient powders were provided in a molar ratio of $LiBr:YbCl_3:ZnBr_2 = 2.8:1:0.1$.

In EXAMPLE A19, LiBr, $YbBr_3$, and $ZnBr_2$ as ingredient powders were provided in a molar ratio of $LiBr:YbBr_3:ZnBr_2 = 2.8:1:0.1$.

In EXAMPLE A20, LiBr, LiI, $YbCl_3$, $YbI_3$, and $ZnBr_2$ as ingredient powders were provided in a molar ratio of $LiBr:LiI:YbCl_3:YbBr_3:ZnBr_2 = 0.8:2:0.67:0.33:0.1$.

In EXAMPLE A21, LiBr, LiCl, $YbCl_3$, and $ZnCl_2$ as ingredient powders were provided in a molar ratio of $LiBr:LiCl:YbCl_3:ZnCl_2 = 2:0.8:1:0.1$.

In EXAMPLE A22, LiBr, LiCl, $YbCl_3$, and $MgCl_2$ as ingredient powders were provided in a molar ratio of $LiBr:LiCl:YbCl_3:MgCl_2 = 2:0.8:1:0.1$.

In EXAMPLE A23, LiBr, LiCl, $YbCl_3$, and $CaCl_2$ as ingredient powders were provided in a molar ratio of $LiBr:LiCl:YbCl_3:CaCl_2 = 2:0.8:1:0.1$.

In EXAMPLE A24, LiBr, LiCl, $YbCl_3$, and $SrCl_2$ as ingredient powders were provided in a molar ratio of $LiBr:LiCl:YbCl_3:SrCl_2 = 2:0.8:1:0.1$.

In EXAMPLES A2 to A17, the mixture of the ingredient powders was heat-treated in a dry argon atmosphere at 600°C for 1 hour.

In EXAMPLES A18, A19, and A21 to A24, the mixture of the ingredient powders was heat-treated in a dry argon atmosphere at 550°C for 1 hour.

In EXAMPLE A20, the mixture of the ingredient powders was heat-treated in a dry argon atmosphere at 480°C for 1 hour.

Solid electrolyte materials of EXAMPLES A2 to A24 were obtained in the same manner as in EXAMPLE A1 except for the above differences.

(Evaluation of Ion Conductivity)

The ion conductivity of the solid electrolyte materials of EXAMPLES A2 to A24 was measured in the same manner as in EXAMPLE A1. The measurement results are described in Table 1.

(X-Ray Diffractometry)

X-ray diffraction patterns of the solid electrolyte materials of EXAMPLES A2 to A24 were measured in the same manner as in EXAMPLE A1.

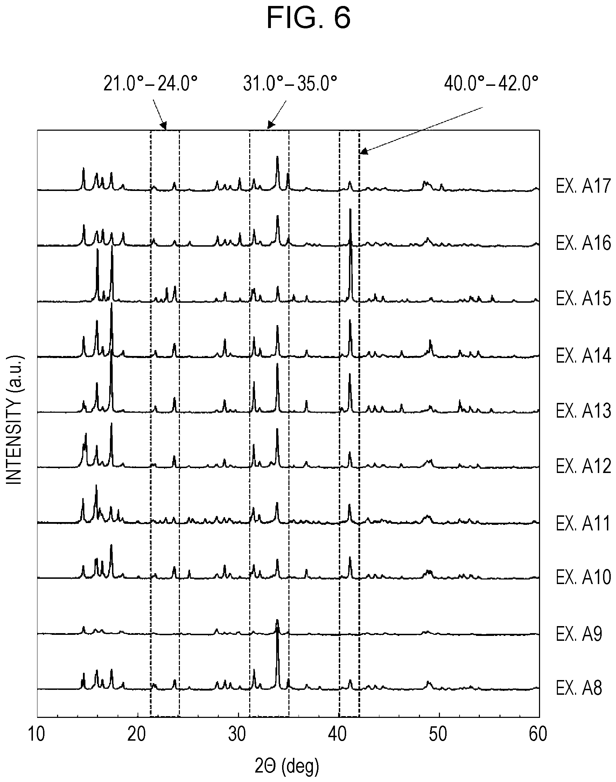

Figs. 4 to 6 are graphs illustrating the X-ray diffraction patterns of the solid electrolyte materials of EXAMPLES A2 to A24. Specifically, Fig. 4 is a graph illustrating the X-ray diffraction patterns of the solid electrolyte materials of EXAMPLES A3 to A14, and A16 to A24. Fig. 5 is a graph illustrating the X-ray diffraction patterns of the solid electrolyte materials of EXAMPLES A2, A3, and A15. Fig. 6 is a graph illustrating the X-ray diffraction patterns of the solid electrolyte materials of EXAMPLES A8 to A17. The materials of EXAMPLES A4 to A7, and A18 to A24 contained a first crystal phase. The material of EXAMPLE A2 had a second crystal phase. The material of EXAMPLE A3 contained a first crystal phase and a second crystal phase. The materials of EXAMPLES A8 to A14, A16, and A17 contained a first crystal phase and a third crystal phase. The material of EXAMPLE A15 contained a second crystal phase and a third crystal phase. The angles of the peaks observed of the first, the second, and the third crystal phases are described in Tables 2 to 4, respectively.

(Charging-Discharging Test)

Batteries of EXAMPLES A2 to A24 were obtained in the same manner as in EXAMPLE 1 using the solid electrolyte materials of EXAMPLES A2 to A24. The batteries of EXAMPLES A2 to A24 were subjected to the charging-discharging test in the same manner as in EXAMPLE A1. As a result, the batteries of EXAMPLES A2 to A24 were charged and discharged satisfactorily similarly to the battery of EXAMPLE A1.

<COMPARATIVE EXAMPLES A1 and A2>

(Preparation of Solid Electrolyte Materials)

In COMPARATIVE EXAMPLE A1, LiCl and $YbCl_3$ as ingredient powders were provided in a molar ratio of $LiCl:YbCl_3$ = 3:1. The mixture of the ingredient powders was heat-treated in a dry argon atmosphere at 600°C for 1 hour.

In COMPARATIVE EXAMPLE A2, LiBr and $YbBr_3$ as ingredient powders were provided in a molar ratio of $LiBr:YbBr_3$ = 3:1. The mixture of the ingredient powders was heat-treated in a dry argon atmosphere at 550°C for 1 hour.

Solid electrolyte materials of COMPARATIVE EXAMPLES A1 and A2 were obtained in the same manner as in EXAMPLE A1 except for the above differences.

(Evaluation of Ion Conductivity)

The ion conductivity of the solid electrolyte materials of COMPARATIVE EXAMPLES A1 and A2 was measured in the same manner as in EXAMPLE A1. The measurement results are described in Table 1.

(X-Ray Diffractometry)

X-ray diffraction patterns of the solid electrolyte materials of COMPARATIVE EXAMPLES A1 and A2 were measured in the same manner as in EXAMPLE A1.

Fig. 5 is a graph illustrating the X-ray diffraction pattern of the solid electrolyte material of COMPARATIVE EXAMPLE A1. Fig. A4 is a graph illustrating the X-ray diffraction pattern of the solid electrolyte material of COMPARATIVE EXAMPLE A2. The solid electrolyte material of COMPARATIVE EXAMPLE A1 contained a second crystal phase. The solid electrolyte material of COMPARATIVE EXAMPLE A2 contained a first crystal phase. The angles of the X-ray diffraction peaks observed of the first and the second crystal phases are described in Tables 2 and 3.

The compositions of the solid electrolyte materials of EXAMPLES A and COMPARATIVE EXAMPLES A are described in Table 1. Table 1 also describes the values corresponding to a, b, x, and y, and the element M in the compositional formula (1).

[Table 1]

|  |  | Composition | M | a | b | x | y | Ion conductivity (S/cm) |
|---|---|---|---|---|---|---|---|---|
|  | EX. A1 | $Li_{3.15}Yb_{0.85}Mg_{0.15}Cl_6$ | Mg | 0.85 | 0.15 | 0 | 0 | $1.24 \times 10^{-4}$ |
|  | EX. A2 | $Li_{3.1}Yb_{0.9}Mg_{0.1}Cl_6$ | Mg | 0.9 | 0.1 | 0 | 0 | $1.01 \times 10^{-4}$ |
|  | EX. A3 | $Li_{3.1}Yb_{0.9}Zn_{0.1}Cl_6$ | Zn | 0.9 | 0.1 | 0 | 0 | $2.52 \times 10^{-4}$ |
|  | EX. A4 | $Li_{3.2}Yb_{0.9}Zn_{0.2}Cl_6$ | Zn | 0.8 | 0.2 | 0 | 0 | $3.55 \times 10^{-4}$ |
|  | EX. A5 | $Li_{3.3}Yb_{0.7}Zn_{0.3}Cl_6$ | Zn | 0.7 | 0.3 | 0 | 0 | $2.56 \times 10^{-4}$ |
|  | EX. A6 | $Li_{3.4}Yb_{0.6}Zn_{0.4}Cl_6$ | Zn | 0.6 | 0.4 | 0 | 0 | $3.07 \times 10^{-4}$ |
|  | EX. A7 | $Li_{3.5}Yb_{0.5}Zn_{0.5}Cl_6$ | Zn | 0.5 | 0.5 | 0 | 0 | $8.64 \times 10^{-5}$ |
|  | EX. A8 | $Li_{3.2}Yb_{0.6}Zn_{0.5}Cl_6$ | Zn | 0.6 | 0.5 | 0 | 0 | $1.63 \times 10^{-4}$ |
|  | EX. A9 | $Li_3Yb_{0.6}Zn_{0.6}Cl_6$ | Zn | 0.6 | 0.6 | 0 | 0 | $8.29 \times 10^{-5}$ |
|  | EX. A10 | $Li_{2.9}Yb_{0.9}Zn_{0.2}Cl_6$ | Zn | 0.9 | 0.2 | 0 | 0 | $3.29 \times 10^{-4}$ |
|  | EX. A11 | $Li_{2.6}YbZn_{0.2}Cl_6$ | Zn | 1 | 0.2 | 0 | 0 | $2.76 \times 10^{-4}$ |
|  | EX. A12 | $Li_{2.3}Yb_{1.1}Zn_{0.2}Cl_6$ | Zn | 1.1 | 0.2 | 0 | 0 | $1.42 \times 10^{-4}$ |
|  | EX. A13 | $Li_{2.7}YbZn_{0.15}Cl_6$ | Zn | 1 | 0.15 | 0 | 0 | $7.33 \times 10^{-5}$ |
|  | EX. A14 | $Li_{2.8}YbZn_{0.1}Cl_6$ | Zn | 1 | 0.1 | 0 | 0 | $1.19 \times 10^{-4}$ |
|  | EX. A15 | $Li_{2.9}YbZn_{0.05}Cl_6$ | Zn | 1 | 0.05 | 0 | 0 | $7.36 \times 10^{-5}$ |
|  | EX. A16 | $Li_{3.35}Yb_{0.75}Zn_{0.2}Cl_6$ | Zn | 0.75 | 0.2 | 0 | 0 | $1.59 \times 10^{-4}$ |
|  | EX. A17 | $Li_{3.5}Yb_{0.7}Zn_{0.2}Cl_6$ | Zn | 0.7 | 0.2 | 0 | 0 | $9.73 \times 10^{-5}$ |
|  | EX. A18 | $Li_{2.8}YbZn_{0.1}Br_3Cl_3$ | Zn | 1 | 0.1 | 3 | 0 | $1.95 \times 10^{-3}$ |
|  | EX. A19 | $Li_{2.8}YbZn_{0.1}Br_6$ | Zn | 1 | 0.1 | 6 | 0 | $1.32 \times 10^{-4}$ |
|  | EX. A20 | $Li_{2.8}Zn_{0.1}YbCl_2Br_2I_2$ | Zn | 1 | 0.1 | 2 | 2 | $3.38 \times 10^{-4}$ |
|  | EX. A21 | $Li_{2.8}YbZn_{0.1}Br_2Cl_4$ | Zn | 1 | 0.1 | 2 | 0 | $2.15 \times 10^{-3}$ |
|  | EX. A22 | $Li_{2.8}YbMg_{0.1}Br_2Cl_4$ | Mg | 1 | 0.1 | 2 | 0 | $1.33 \times 10^{-3}$ |
|  | EX. A23 | $Li_{2.8}YbCa_{0.1}Br_2Cl_4$ | Ca | 1 | 0.1 | 2 | 0 | $1.21 \times 10^{-3}$ |
|  | EX. A24 | $Li_{2.8}YbSr_{0.1}Br_2Cl_4$ | Sr | 1 | 0.1 | 2 | 0 | $1.60 \times 10^{-3}$ |
|  | COMP. EX. A1 | $Li_3YbCl_6$ | - | 1 | 0 | 0 | 0 | $4.98 \times 10^{-5}$ |
|  | COMP. EX. A2 | $Li_3YbBr_6$ | - | 1 | 6 | 0 | 0 | $3.31 \times 10^{-5}$ |

[Table 2]

|  | Angles of diffraction peaks assigned to first crystal phase (°) | |
|---|---|---|
|  | 13.0° to 15.0° | 26.0° to 35.0° |
| EX. A1 | 14.64 | 27.87, 29.49, 33.90 |
| EX. A3 | 14.72 | 27.95, 29.26, 33.99 |
| EX. A4 | 14.56 | 27.94, 29.22, 33.89 |
| EX. A5 | 14.64 | 27.87, 29.22, 33.89 |
| EX. A6 | 14.68 | 27.91, 29.22, 33.93 |
| EX. A7 | 14.68 | 27.90, 29.20, 33.93 |
| EX. A8 | 14.64 | 27.94, 29.20, 33.89 |

(continued)

|  | Angles of diffraction peaks assigned to first crystal phase (°) | |
|---|---|---|
|  | 13.0° to 15.0° | 26.0° to 35.0° |
| EX. A9 | 14.61 | 27.83, 29.15, 33.88 |
| EX. A10 | 14.60 | 27.87, 29.16, 33.89 |
| EX. A11 | 14.56 | 27.84, 29.15, 33.83 |
| EX. A12 | 14.86 | 27.90, 29.22, 33.86 |
| EX. A13 | 14.60 | 27.87, 29.19, 33.89 |
| EX. A14 | 14.61 | 27.91, 29.19, 33.90 |
| EX. A16 | 14.64 | 27.94, 29.22, 33.93 |
| EX. A17 | 14.60 | 27.90, 29.22, 33.89 |
| EX. A18 | 14.15 | 27.03, 28.47, 32.83 |
| EX. A19 | 13.88 | 27.90, 29.19, 32.14 |
| EX. A20 | 13.77 | 26.08, 27.82, 30.22 |
| EX. A21 | 14.33 | 27.33, 28.85, 33.17 |
| EX. A22 | 14.27 | 27.26, 28.75, 33.13 |
| EX. A23 | 14.29 | 27.29, 28.78, 33.13 |
| EX. A24 | 14.31 | 27.30, 28.80, 33.17 |
| COMP. EX. A2 | 13.84 | 27.67, 28.96, 32.11 |

[Table 3]

|  | Angles of diffraction peaks assigned to second crystal phase (°) | | |
|---|---|---|---|
|  | 22.0° to 23.5° | 31.0° to 35.0° | 40.0° to 42.0° |
| EX. A2 | 22.86 | 31.58, 32.18, 33.85 | 41.10 |
| EX. A3 | 22.97 | 31.66, 32.26, 33.99 | 41.21 |
| EX. A15 | 22.90 | 31.62, 32.19, 33.93 | 41.14 |
| COMP. EX. A1 | 22.82 | 31.57, 32.16, 33.88 | 41.07 |

[Table 4]

|  | Angles of diffraction peaks assigned to third crystal phase (°) | | |
|---|---|---|---|
|  | 21.0° to 24.0° | 31.0° to 35.0° | 40.0° to 42.0° |
| EX. A8 | 21.54, 23.69 | 31.58, 32.20, 33.89 | 41.13 |
| EX. A9 | 21.60, 23.62 | 31.47, 32.07, 33.88 | 41.03 |
| EX. A10 | 21.51, 23.66 | 31.55, 32.18, 33.89 | 41.10 |
| EX. A11 | 21.50, 23.59 | 31.51, 32.11, 33.83 | 41.06 |
| EX. A12 | 21.46, 23.65 | 31.54, 32.15, 33.86 | 41.10 |
| EX. A13 | 21.51, 23.66 | 31.58, 32.15, 33.89 | 41.10 |
| EX. A14 | 21.51, 23.66 | 31.58, 32.19, 33.90 | 41.11 |
| EX. A15 | 21.53, 23.70 | 31.62, 32.19, 33.93 | 41.14 |

(continued)

|  | Angles of diffraction peaks assigned to third crystal phase (°) | | |
|---|---|---|---|
|  | 21.0° to 24.0° | 31.0° to 35.0° | 40.0° to 42.0° |
| EX. A16 | 21.61, 23.69 | 31.58, 32.19, 33.93 | 41.13 |
| EX. A17 | 21.61, 23.66 | 31.55, 32.18, 33.89 | 41.10 |

<Discussion>

The solid electrolyte materials of EXAMPLES A1 to A24 have a high lithium ion conductivity of greater than or equal to $5.0 \times 10^{-5}$ S/cm near room temperature.

As is clear from the comparison of EXAMPLES A1 to A24 with COMPARATIVE EXAMPLES A1 and A2, the solid electrolyte materials that are represented by the compositional formula (1) and contain M in addition to Li, Yb, and X exhibit markedly high ion conductivity as compared to when the solid electrolytes do not contain M. This is probably because the incorporation of M into the solid electrolyte material facilitates the occurrence of lithium ion diffusion pathways in the crystal lattices.

As is clear from the comparison of EXAMPLES A1 to A6 with EXAMPLE A7, the solid electrolyte materials attain higher ion conductivity when $0 < b$ and $a + b = 1$ (that is, Yb is partially substituted with M), and further $b \leq 0.4$. This is probably because the increase in the value of b results in precipitation of a crystal phase that is different from the first, the second, and the third crystal phases which tend to have high lithium ion conductivity. The X-ray diffraction pattern of the solid electrolyte material of EXAMPLE 7 had diffraction peaks assigned to $Li_2ZnCl_4$.

As is clear from the comparison of EXAMPLES A4, A10, and A11 with EXAMPLES A12, A16, and A17, the solid electrolyte materials having $b = 0.2$ attain higher ion conductivity when $0.8 \leq a \leq 1$. This is probably because the quantitative ratio is in an optimum relationship between Li that is an ion conductive carrier, and Yb and M that form the skeleton of the crystal lattices (that is, ion conductive pathways).

As is clear from the comparison of EXAMPLE A11 with EXAMPLES A13, A14, and A15, the solid electrolyte material having $a = 1$ attains higher ion conductivity when $b = 0.2$. This is probably because lithium ion vacancies are formed to facilitate the diffusion of lithium ions.

As is clear from the comparison of EXAMPLES A18, A20, and A21 with EXAMPLES A14 and A19, the solid electrolyte materials exhibit markedly high ion conductivity when X includes two or more elements. This is probably because the size of the $YbX_6$ octahedrons in the crystal lattices is optimized to promote the occurrence of lithium ion conductive pathways.

As is clear from the comparison of EXAMPLES A2, A3, and A21 to A24 with one another, the solid electrolyte materials attain higher ion conductivity when M is Zn. This is probably because among Mg, Ca, Sr, and Zn, Zn has the closest ionic radius to Yb, and therefore strains that will disturb lithium ion conduction are unlikely to be introduced into the crystal lattices.

The batteries of EXAMPLES A1 to A24 were charged and discharged at room temperature.

Hydrogen sulfide was not generated because the solid electrolyte materials of EXAMPLES A1 to A24 did not contain sulfur.

Solid electrolyte materials of EXAMPLES B may be represented by the compositional formula (2) described hereinabove.

<EXAMPLE B1>

(Preparation of Solid Electrolyte Material)

In a dry argon atmosphere, LiCl, LiBr, $YbCl_3$, and $YCl_3$ as ingredient powders were provided in a molar ratio of $LiCl:LiBr:YbCl_3:YCl_3 = 2:1:0.9:0.1$. These ingredient powders were crushed and mixed together in an agate mortar. The mixed powder obtained was placed in an alumina crucible and was heat-treated in a dry argon atmosphere at 550°C for 1 hour. The heat-treated product obtained was crushed in an agate mortar. A powder of a solid electrolyte material of EXAMPLE 1 was thus obtained. The solid electrolyte material of EXAMPLE B1 had a composition represented by $Li_3Yb_{0.9}Y_{0.1}Br_1Cl_5$.

(Evaluation of Ion Conductivity)

The ion conductivity of the solid electrolyte material of EXAMPLE B1 was evaluated in the same manner as in EXAMPLE A1.

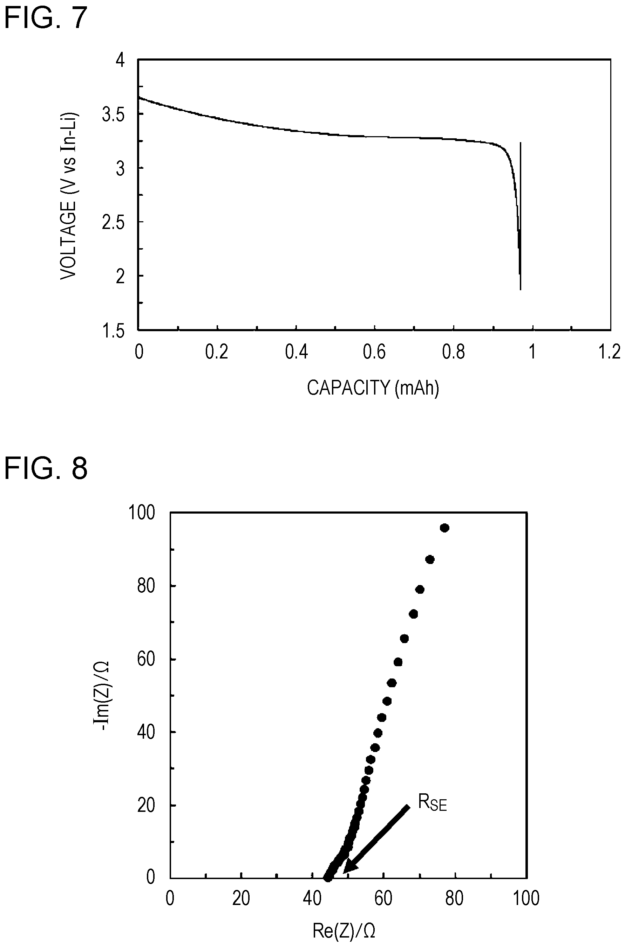

Fig. 8 is a graph illustrating the Cole-Cole plot obtained by the AC impedance measurement of the solid electrolyte material of EXAMPLE B1.

The ion conductivity of the solid electrolyte material of EXAMPLE B1 measured at 25°C was $1.20 \times 10^{-3}$ S/cm.

(X-Ray Diffractometry)

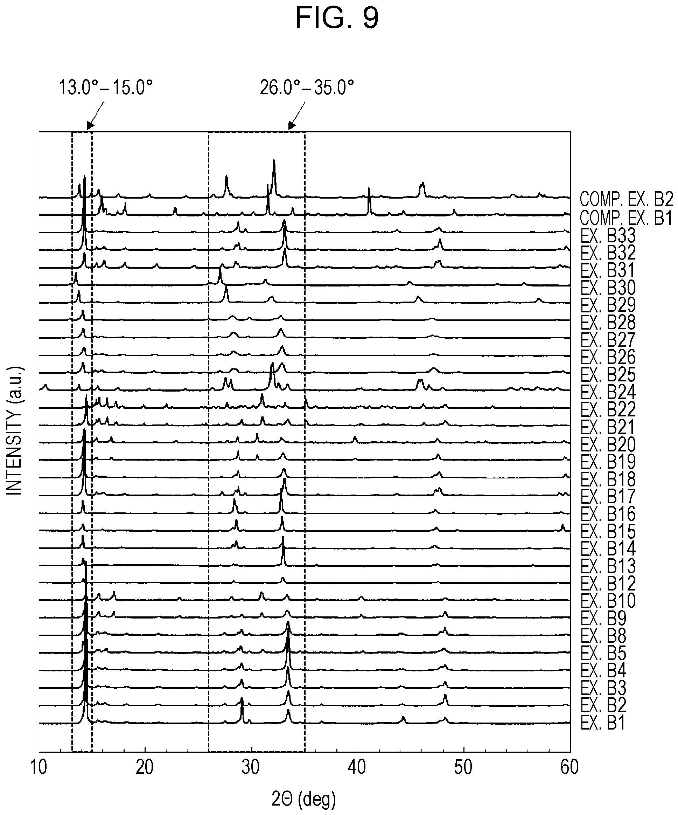

Fig. 9 is a graph illustrating an X-ray diffraction pattern of the solid electrolyte material of EXAMPLE B1. The results illustrated in Fig. 9 were measured in the same manner as in EXAMPLE A1.

The X-ray diffraction pattern of the solid electrolyte material of EXAMPLE B1 had one peak in the range of greater than or equal to 13.0° and less than or equal to 15.0°, and two peaks in the range of greater than or equal to 26.0° and less than or equal to 35.0°. Thus, the solid electrolyte material of EXAMPLE B1 contained a fifth crystal phase (namely, a monoclinic crystal). The angles of the distinct X-ray diffraction peaks observed of the fifth crystal phase are described in Table 6.

(Fabrication of Battery)

A battery of EXAMPLE B1 was obtained in the same manner as in EXAMPLE A1, except that the solid electrolyte material of EXAMPLE B1 was used in place of the solid electrolyte material of EXAMPLE A1.

(Charging-Discharging Test)

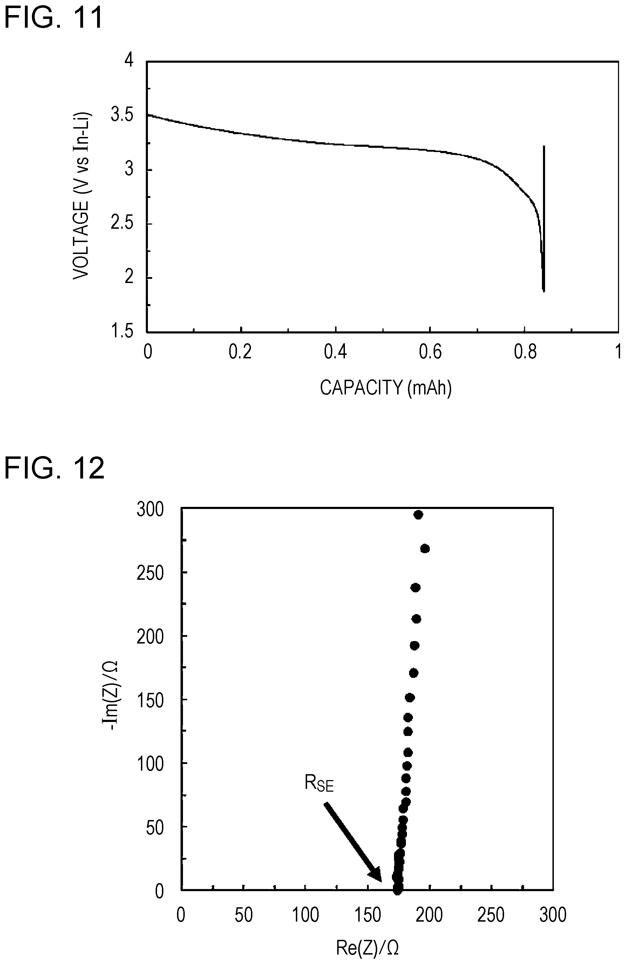

Fig. 11 is a graph illustrating initial discharge characteristics of the battery of EXAMPLE B 1. Initial charge-discharge characteristics were measured in the same manner as in EXAMPLE A1.

As a result of the charging-discharging test, the battery of EXAMPLE B1 had an initial discharge capacity of 0.84 mAh.

<EXAMPLES B2 to B33>

(Preparation of Solid Electrolyte Materials)

In EXAMPLE B2, LiCl, LiBr, $YbCl_3$, and $YCl_3$ as ingredient powders were provided in a molar ratio of LiCl:LiBr:$YbCl_3$:$YCl_3$ = 2:1:0.8:0.2.

In EXAMPLE B3, LiCl, LiBr, $YbCl_3$, and $YCl_3$ as ingredient powders were provided in a molar ratio of LiCl:LiBr:$YbCl_3$:$YCl_3$ = 2:1:0.7:0.3.

In EXAMPLE B4, LiCl, LiBr, $YbCl_3$, and $YCl_3$ as ingredient powders were provided in a molar ratio of LiCl:LiBr:$YbCl_3$:$YCl_3$ = 2:1:0.6:0.4.

In EXAMPLE B5, LiCl, LiBr, $YbCl_3$, and $YCl_3$ as ingredient powders were provided in a molar ratio of LiCl:LiBr:YbCl3:YC13 = 2:1:0.5:0.5.

In EXAMPLE B6, LiCl, LiBr, $YbCl_3$, and $YCl_3$ as ingredient powders were provided in a molar ratio of LiCl:LiBr:YbCl3:YC13 = 2:1:0.3:0.7.

In EXAMPLE B7, LiCl, LiBr, $YbCl_3$, and $YCl_3$ as ingredient powders were provided in a molar ratio of LiCl:LiBr:YbCl3:YC13 = 2:1:0.1:0.9.

In EXAMPLE B8, LiCl, LiBr, $YbCl_3$, and $GdCl_3$ as ingredient powders were provided in a molar ratio of LiCl:LiBr:$YbCl_3$:$GdCl_3$ = 2:1:0.9:0.1.

In EXAMPLE B9, LiCl, LiBr, $YbCl_3$, and $GdCl_3$ as ingredient powders were provided in a molar ratio of LiCl:LiBr:$YbCl_3$:$GdCl_3$ = 2:1:0.7:0.3.

In EXAMPLE B10, LiCl, LiBr, $YbCl_3$, and $GdCl_3$ as ingredient powders were provided in a molar ratio of LiCl:LiBr:$YbCl_3$:$GdCl_3$ = 2:1:0.5:0.5.

In EXAMPLE B11, LiCl, LiBr, $YbCl_3$, and $GdCl_3$ as ingredient powders were provided in a molar ratio of LiCl:LiBr:$YbCl_3$:$GdCl_3$ = 2:1:0.3:0.7.

In EXAMPLE B12, LiCl, LiBr, $YbCl_3$, and $YCl_3$ as ingredient powders were provided in a molar ratio of LiCl:LiBr:YbCl3:YC13 = 1:2:0.9:0.1.

In EXAMPLE B13, LiCl, LiBr, $YbCl_3$, and $YCl_3$ as ingredient powders were provided in a molar ratio of LiCl:LiBr:YbCl3:YC13 = 1:2:0.7:0.3.

In EXAMPLE B14, LiCl, LiBr, $YbCl_3$, and $YCl_3$ as ingredient powders were provided in a molar ratio of LiCl:LiBr:YbCl3:YC13 = 1:2:0.5:0.5.

In EXAMPLE B15, LiCl, LiBr, $YbCl_3$, and $YCl_3$ as ingredient powders were provided in a molar ratio of LiCl:Li-

Br:YbCl3:YC13 = 1:2:0.3:0.7.

In EXAMPLE B16, LiCl, LiBr, YbCl$_3$, and YCl$_3$ as ingredient powders were provided in a molar ratio of LiCl:Li-Br:YbCl3:YC13 = 1:2:0.1:0.9.

In EXAMPLE B17, LiCl, LiBr, YbCl$_3$, and GdCl$_3$ as ingredient powders were provided in a molar ratio of LiCl:Li-Br:YbCl$_3$:GdCl$_3$ = 1:2:0.9:0.1.

In EXAMPLE B18, LiCl, LiBr, YbCl$_3$, and GdCl$_3$ as ingredient powders were provided in a molar ratio of LiCl:Li-Br:YbCl$_3$:GdCl$_3$ = 1:2:0.7:0.3.

In EXAMPLE B19, LiCl, LiBr, YbCl$_3$, and GdCl$_3$ as ingredient powders were provided in a molar ratio of LiCl:Li-Br:YbCl$_3$:GdCl$_3$ = 1:2:0.5:0.5.

In EXAMPLE B20, LiCl, LiBr, YbCl$_3$, and GdCl$_3$ as ingredient powders were provided in a molar ratio of LiCl:Li-Br:YbCl$_3$:GdCl$_3$ = 1:2:0.3:0.7.

In EXAMPLE B21, LiCl, LiBr, YbCl$_3$, and YCl$_3$ as ingredient powders were provided in a molar ratio of LiCl:Li-Br:YbCl$_3$:YCl$_3$ = 1.7:1:0.8:0.3.

In EXAMPLE B22, LiCl, LiBr, YbCl$_3$, and YCl$_3$ as ingredient powders were provided in a molar ratio of LiCl:Li-Br:YbCl$_3$:YCl$_3$ = 1.7:1:0.7:0.4.

In EXAMPLE B23, LiCl, YbCl$_3$, and YCl$_3$ as ingredient powders were provided in a molar ratio of LiCl:YbCl3:YC13 = 3:0.7:0.3.

In EXAMPLE B24, LiBr, YbBr$_3$, and YBr$_3$ as ingredient powders were provided in a molar ratio of Li-Cl:YbCl3:YC13 = 3:0.7:0.3.

In EXAMPLE B25, LiCl, LiBr, LiI, YbCl$_3$, and YCl$_3$ as ingredient powders were provided in a molar ratio of LiCl:LiBr:LiI:YbCl$_3$:YCl$_3$ = 1:1.5:0.5:0.7:0.3.

In EXAMPLE B26, LiCl, LiBr, LiI, YbCl$_3$, and YCl$_3$ as ingredient powders were provided in a molar ratio of LiCl:LiBr:LiI:YbCl$_3$:YCl$_3$ = 1:1.5:0.5:0.5:0.5.

In EXAMPLE B27, LiCl, LiBr, LiI, YbCl$_3$, and YCl$_3$ as ingredient powders were provided in a molar ratio of LiCl:LiBr:LiI:YbCl$_3$:YCl$_3$ = 1:1.5:0.5:0.3:0.7.

In EXAMPLE B28, LiCl, LiBr, LiI, YbCl$_3$, and YCl$_3$ as ingredient powders were provided in a molar ratio of LiCl:LiBr:LiI:YbCl$_3$:YCl$_3$ = 0.5:1.5:1:0.5:0.5.

In EXAMPLE B29, LiCl, LiI, YbBr$_3$, and YBr$_3$ as ingredient powders were provided in a molar ratio of LiCl:LiI:YbBr$_3$:YBr$_3$ = 2:1:0.5:0.5.

In EXAMPLE B30, LiCl, LiBr, LiI, YbCl$_3$, and YBr$_3$ as ingredient powders were provided in a molar ratio of LiCl:LiBr:LiI:YbCl$_3$:YBr$_3$ = 0.5:0.5:2:0.5:0.5.

In EXAMPLE B31, LiCl, LiBr, YbCl$_3$, and InCl$_3$ as ingredient powders were provided in a molar ratio of LiCl:Li-Br:YbCl$_3$:InCl$_3$ = 1:2:0.9:0.1.

In EXAMPLE B32, LiCl, LiBr, YbCl$_3$, and TbCl$_3$ as ingredient powders were provided in a molar ratio of LiCl:Li-Br:YbCl$_3$:TbCl$_3$ = 1:2:0.9:0.1.

In EXAMPLE B33, LiCl, LiBr, YbCl$_3$, and SmCl$_3$ as ingredient powders were provided in a molar ratio of LiCl:Li-Br:YbCl$_3$:SmCl$_3$ = 1:2:0.9:0.1.

In EXAMPLES B2 to B22, B24, B32, and B33, the mixture of the ingredient powders was heat-treated in a dry argon atmosphere at 550°C for 1 hour.

In EXAMPLE B23, the mixture of the ingredient powders was heat-treated in a dry argon atmosphere at 600°C for 1 hour.

In EXAMPLES B25 to B30, the mixture of the ingredient powders was heat-treated in a dry argon atmosphere at 480°C for 1 hour.

In EXAMPLE B31, the mixture of the ingredient powders was heat-treated in a dry argon atmosphere at 350°C for 5 hours.

Solid electrolyte materials of EXAMPLES B2 to B33 were obtained in the same manner as in EXAMPLE B1 except for the above differences.

(Evaluation of Ion Conductivity)

The ion conductivity of the solid electrolyte materials of EXAMPLES B2 to B33 was measured in the same manner as in EXAMPLE A1. The measurement results are described in Table 5.

(X-Ray Diffractometry)

X-ray diffraction patterns of the solid electrolyte materials of EXAMPLES B2 to B33 were measured in the same manner as in EXAMPLE A1.

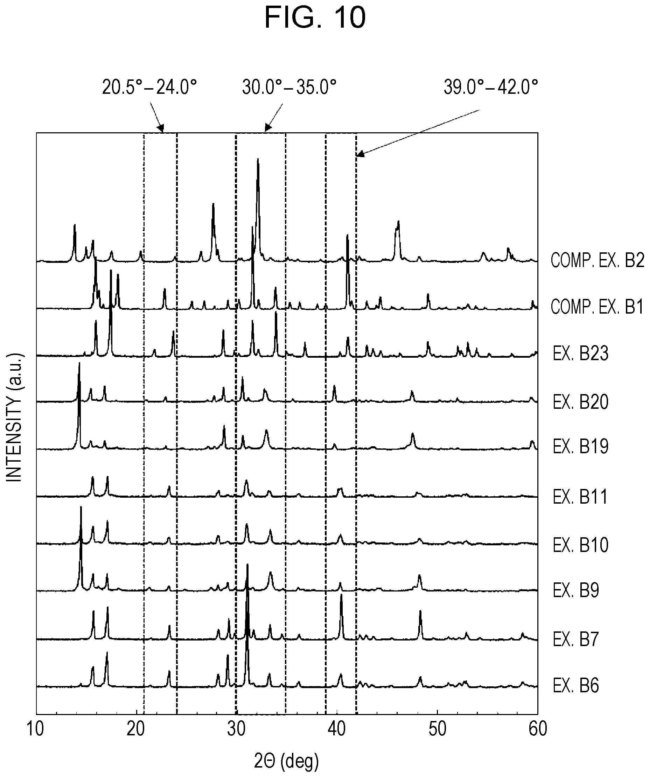

Figs. 9 and 10 are graphs illustrating the X-ray diffraction patterns of the solid electrolyte materials of EXAMPLES B2 to B33. Specifically, Fig. 9 is a graph illustrating the X-ray diffraction patterns of the solid electrolyte materials of EXAMPLES B2 to B5, B8 to B10, B12 to B22, and B24 to B33. Fig. 10 is a graph illustrating the X-ray diffraction patterns of the solid electrolyte materials of EXAMPLES B6, B7, B9 to B11, B19, B20, and B23. The materials of EXAMPLES B2 to B5, B8, B12 to B18, B21, B22, and B24 to B33 contained a fifth crystal phase. The materials of EXAMPLES B6, B7, B11, and B23 contained a sixth crystal phase. The materials of EXAMPLES B9, B10, B19, and B20 contained a fifth crystal phase and a sixth crystal phase. The angles of the peaks observed of the fifth and the sixth crystal phases are described in Tables 6 and 7, respectively.

(Charging-Discharging Test)

Batteries of EXAMPLES B2 to B33 were obtained in the same manner as in EXAMPLE A1 using the solid electrolyte materials of EXAMPLES B2 to B33. The batteries of EXAMPLES B2 to B33 were subjected to the charging-discharging test in the same manner as in EXAMPLE A1. As a result, the batteries of EXAMPLES B2 to B33 were charged and discharged satisfactorily similarly to the battery of EXAMPLE B1.

<COMPARATIVE EXAMPLES B1 and B2>

The solid electrolyte materials of COMPARATIVE EXAMPLES A1 and A2 were used as solid electrolyte materials of COMPARATIVE EXAMPLES B1 and B2, respectively.

Figs. 9 and 10 are graphs illustrating X-ray diffraction patterns of the solid electrolyte materials of COMPARATIVE EXAMPLES B 1 and B2. The solid electrolyte material of COMPARATIVE EXAMPLE B2 contained a fifth crystal phase. The solid electrolyte material of COMPARATIVE EXAMPLE B 1 had a structure similar to $Li_3YbCl_6$ disclosed in ICSD Collection Code 50152. The angles of the X-ray diffraction peaks of the fifth crystal phase that were observed in COMPARATIVE EXAMPLE B2 are described in Table 6.

The compositions of the solid electrolyte materials of EXAMPLES B and COMPARATIVE EXAMPLES B are described in Table 5. Table 5 also describes the values corresponding to a, b, x, and y, and the element M in the compositional formula (2).

[Table 5]

| | Composition | M | a | b | x | y | Ion conductivity (S/cm) |
|---|---|---|---|---|---|---|---|
| EX. B1 | $Li_3Yb_{0.9}Y_{0.1}Br_1Cl_5$ | Y | 1 | 0.1 | 1 | 0 | $1.20 \times 10^{-3}$ |
| EX. B2 | $Li_3Yb_{0.8}Y_{0.2}Br_1Cl_5$ | Y | 1 | 0.2 | 1 | 0 | $1.31 \times 10^{-3}$ |
| EX. B3 | $Li_3Yb_{0.7}Y_{0.3}Br_1Cl_5$ | Y | 1 | 0.3 | 1 | 0 | $1.42 \times 10^{-3}$ |
| EX. B4 | $Li_3Yb_{0.6}Y_{0.4}Br_1Cl_5$ | Y | 1 | 0.4 | 1 | 0 | $1.16 \times 10^{-3}$ |
| EX. B5 | $Li_3Yb_{0.5}Y_{0.5}Br_1Cl_5$ | Y | 1 | 0.5 | 1 | 0 | $1.09 \times 10^{-3}$ |
| EX. B6 | $Li_3Yb_{0.3}Y_{0.7}Br_1Cl_5$ | Y | 1 | 0.7 | 1 | 0 | $8.07 \times 10^{-4}$ |
| EX. B7 | $Li_3Yb_{0.1}Y_{0.9}Br_1Cl_5$ | Y | 1 | 0.9 | 1 | 0 | $7.22 \times 10^{-4}$ |
| EX. B8 | $Li_3Yb_{0.9}Gd_{0.1}Br_1Cl_5$ | Gd | 1 | 0.1 | 1 | 0 | $9.95 \times 10^{-4}$ |
| EX. B9 | $Li_3Yb_{0.7}Gd_{0.3}Br_1Cl_5$ | Gd | 1 | 0.3 | 1 | 0 | $9.31 \times 10^{-4}$ |
| EX. B10 | $Li_3Yb_{0.5}Gd_{0.5}Br_1Cl_5$ | Gd | 1 | 0.5 | 1 | 0 | $5.84 \times 10^{-4}$ |
| EX. B11 | $Li_3Yb_{0.3}Gd_{0.7}Br_1Cl_5$ | Gd | 1 | 0.7 | 1 | 0 | $5.82 \times 10^{-4}$ |
| EX. B12 | $Li_3Yb_{0.9}Y_{0.1}Br_2Cl_4$ | Y | 1 | 0.1 | 2 | 0 | $1.46 \times 10^{-3}$ |
| EX. B13 | $Li_3Yb_{0.7}Y_{0.3}Br_2Cl_4$ | Y | 1 | 0.3 | 2 | 0 | $1.72 \times 10^{-3}$ |
| EX. B14 | $Li_3Yb_{0.5}Y_{0.5}Br_2Cl_4$ | Y | 1 | 0.5 | 2 | 0 | $1.09 \times 10^{-3}$ |
| EX. B15 | $Li_3Yb_{0.3}Y_{0.7}Br_2Cl_4$ | Y | 1 | 0.7 | 2 | 0 | $1.44 \times 10^{-3}$ |
| EX. B16 | $Li_3Yb_{0.1}Y_{0.9}Br_2Cl_4$ | Y | 1 | 0.9 | 2 | 0 | $1.02 \times 10^{-3}$ |
| EX. B17 | $Li_3Yb_{0.9}Gd_{0.1}Br_2Cl_4$ | Gd | 1 | 0.1 | 2 | 0 | $1.33 \times 10^{-3}$ |
| EX. B18 | $Li_3Yb_{0.7}Gd_{0.3}Br_2Cl_4$ | Gd | 1 | 0.3 | 2 | 0 | $1.29 \times 10^{-3}$ |
| EX. B19 | $Li_3Yb_{0.5}Gd_{0.5}Br_2Cl_4$ | Gd | 1 | 0.5 | 2 | 0 | $1.66 \times 10^{-3}$ |

(continued)

|  | Composition | M | a | b | x | y | Ion conductivity (S/cm) |
|---|---|---|---|---|---|---|---|
| EX. B20 | $Li_3Yb_{0.3}Gd_{0.7}Br_2Cl_4$ | Gd | 1 | 0.7 | 2 | 0 | $1.80 \times 10^{-3}$ |
| EX. B21 | $Li_{2.7}Yb_{0.8}Y_{0.3}Br_1Cl_5$ | Y | 1.1 | 0.3 | 1 | 0 | $7.91 \times 10^{-4}$ |
| EX. B22 | $Li_{2.7}Yb_{0.7}Y_{0.4}Br_1Cl_5$ | Y | 1.1 | 0.4 | 1 | 0 | $7.71 \times 10^{-4}$ |
| EX. B23 | $Li_3Yb_{0.7}Y_{0.3}Cl_6$ | Y | 1 | 0.3 | 0 | 0 | $5.32 \times 10^{-5}$ |
| EX. B24 | $Li_3Yb_{0.7}Y_{0.3}Br_6$ | Y | 1 | 0.3 | 6 | 0 | $7.43 \times 10^{-5}$ |
| EX. B25 | $Li_3Yb_{0.7}Y_{0.3}Cl_4Br_{1.5}I_{0.5}$ | Y | 1 | 0.3 | 1.5 | 0.5 | $1.51 \times 10^{-3}$ |
| EX. B26 | $Li_3Yb_{0.5}Y_{0.5}Cl_4Br_{1.5}I_{0.5}$ | Y | 1 | 0.5 | 1.5 | 0.5 | $1.46 \times 10^{-3}$ |
| EX. B27 | $Li_3Yb_{0.3}Y_{0.7}Cl_4Br_{1.5}I_{0.5}$ | Y | 1 | 0.7 | 1.5 | 0.5 | $1.42 \times 10^{-3}$ |
| EX. B28 | $Li_3Yb_{0.5}Y_{0.5}Cl_{3.5}Br_{1.5}I_1$ | Y | 1 | 0.5 | 1.5 | 1 | $1.94 \times 10^{-3}$ |
| EX. B29 | $Li_3Yb_{0.5}Y_{0.5}Cl_2Br_3I_1$ | Y | 1 | 0.5 | 3 | 1 | $2.21 \times 10^{-3}$ |
| EX. B30 | $Li_3Yb_{0.5}Y_{0.5}Cl_2Br_2I_2$ | Y | 1 | 0.5 | 2 | 2 | $1.11 \times 10^{-3}$ |
| EX. B31 | $Li_3Yb_{0.9}In_{0.1}Br_2Cl_4$ | In | 1 | 0.1 | 2 | 0 | $7.34 \times 10^{-4}$ |
| EX. B32 | $Li_3Yb_{0.9}Tb_{0.1}Br_2Cl_4$ | Tb | 1 | 0.1 | 2 | 0 | $1.74 \times 10^{-3}$ |
| EX. B33 | $Li_3Yb_{0.9}Sm_{0.1}Br_2Cl_4$ | Sm | 1 | 0.1 | 2 | 0 | $1.25 \times 10^{-3}$ |
| COMP. EX. B1 | $Li_3YbCl_6$ | - | 1 | 0 | 0 | 0 | $4.98 \times 10^{-5}$ |
| COMP. EX. B2 | $Li_3YbBr_6$ | - | 1 | 0 | 6 | 0 | $3.31 \times 10^{-5}$ |

[Table 6]

|  | Angles of diffraction peaks assigned to fifth crystal phase (°) | |
|---|---|---|
|  | 13.0° to 15.0° | 26.0° to 35.0° |
| EX. B1 | 14.49 | 29.12, 33.45 |
| EX. B2 | 14.45 | 29.11, 33.47 |
| EX. B3 | 14.45 | 29.09, 33.40 |
| EX. B4 | 14.46 | 29.10, 33.44 |
| EX. B5 | 14.41 | 29.03, 33.39 |
| EX. B8 | 14.45 | 29.08, 33.43 |
| EX. B9 | 14.45 | 29.09, 33.38 |
| EX. B10 | 14.45 | 28.14, 33.36 |
| EX. B12 | 14.19 | 28.32, 32.92 |
| EX. B13 | 14.18 | 28.32, 32.95 |
| EX. B14 | 14.15 | 28.57, 32.87 |
| EX. B15 | 14.15 | 28.58, 32.87 |
| EX. B16 | 14.14 | 28.39, 32.76 |
| EX. B17 | 14.33 | 28.78, 33.10 |
| EX. B18 | 14.30 | 28.77, 33.03 |
| EX. B19 | 14.29 | 28.77, 32.95 |
| EX. B20 | 14.26 | 28.70, 32.76 |

(continued)

|  | Angles of diffraction peaks assigned to fifth crystal phase (°) | |
| --- | --- | --- |
|  | 13.0° to 15.0° | 26.0° to 35.0° |
| EX. B21 | 14.49 | 29.08, 33.44 |
| EX. B22 | 14.56 | 27.71, 32.03 |
| EX. B24 | 13.77 | 27.56, 31.96 |
| EX. B25 | 14.15 | 28.32, 32.86 |
| EX. B26 | 14.30 | 28.28, 32.91 |
| EX. B27 | 14.19 | 28.39, 32.73 |
| EX. B28 | 14.15 | 28.21, 32.76 |
| EX. B29 | 13.77 | 27.64, 31.92 |
| EX. B30 | 13.50 | 27.06, 31.31 |
| EX. B31 | 14.29 | 28.52, 33.14 |
| EX. B32 | 14.34 | 28.80, 33.13 |
| EX. B33 | 14.30 | 28.77, 33.09 |
| COMP. EX. B2 | 13.84 | 27.67, 32.11 |

[Table 7]

|  | Angles of diffraction peaks assigned to sixth crystal phase (°) | | |
| --- | --- | --- | --- |
|  | 20.5° to 24.0° | 30.0° to 35.0° | 39.0° to 42.0° |
| EX. B6 | 21.42, 23.27 | 31.05, 31.66, 33.28 | 40.41 |
| EX. B7 | 21.46, 23.30 | 31.06, 31.69, 33.32 | 40.45 |
| EX. B9 | 21.31, 23.21 | 31.01, 31.58, 33.38 | 40.34 |
| EX. B10 | 21.42, 23.24 | 30.98, 31.69, 33.36 | 40.38 |
| EX. B11 | 21.45, 23.27 | 30.94, 31.50, 33.14 | 40.45 |
| EX. B19 | 21.00, 22.93 | 30.59, 31.20, 32.95 | 39.74 |
| EX. B20 | 20.93, 22.90 | 30.56, 31.15, 32.74 | 39.74 |
| EX. B23 | 21.80, 23.69 | 31.58, 32.15, 33.90 | 41.13 |

<Discussion>

The solid electrolyte materials of EXAMPLES B1 to B33 have a high lithium ion conductivity of greater than or equal to $5.0 \times 10^{-5}$ S/cm near room temperature.

As is clear from the comparison of EXAMPLES B1 to B33 with COMPARATIVE EXAMPLES B1 and B2, the solid electrolyte materials that are represented by the compositional formula (2) and contain M in addition to Li, Yb, and X have markedly high ion conductivity as compared to when the solid electrolytes do not contain M. This is probably because the incorporation of M into the solid electrolyte material facilitates the occurrence of lithium ion diffusion pathways in the crystal lattices.

As is clear from the comparison of EXAMPLES B1 to B5, and B8 with EXAMPLES B6, B7, B9, and B 11, the solid electrolyte materials satisfying a = 1, x = 1, and y = 0 exhibit higher ion conductivity when the solid electrolyte material contains a fifth crystal phase (that is, does not include a sixth crystal phase) irrespective of the type of the element M. This is probably because conductive pathways for lithium ion diffusion are appropriately formed more easily in the anion sublattices satisfying x ≤ 1 and y = 0 when the crystal phase is a fifth crystal phase rather than a sixth crystal phase.

As is clear from the comparison of EXAMPLES B 12 to B 18 with EXAMPLES B 19 and B20, the solid electrolyte materials satisfying a = 1, x = 2, and y = 0 have high ion conductivity even when the solid electrolyte material contains a sixth crystal phase in addition to a fifth crystal phase. This is probably because conductive pathways for lithium ion diffusion are appropriately formed easily in a fifth crystal phase and also in a sixth crystal phase when the anion sublattices satisfy x = 2 and y = 0.

As is clear from the comparison of EXAMPLES B2 to B4 with EXAMPLES B21 and B22, the solid electrolyte materials have higher ion conductivity when the value of a is 1. This is probably because the quantitative ratio is in an optimum relationship between Li that is an ion conductive carrier, and Yb and M that form the skeleton of the crystal lattices (that is, ion conductive pathways).

As is clear from the comparison of EXAMPLES B3 and B13 with EXAMPLES B23 and B24, the solid electrolyte materials have higher ion conductivity when 0 < x < 6 is satisfied. This is probably because lithium ion diffusion pathways are formed easily in the crystal lattices when X includes two or more kinds of elements.

As is clear from EXAMPLES B25 to B30, the solid electrolyte materials have high ion conductivity even when the value of y is more than 0. Furthermore, as is clear from the comparison of EXAMPLES B28 and B29 with EXAMPLES B14, B26, and B30, the solid electrolyte materials have higher ion conductivity particularly when the value of y is 1. This is probably because the lithium ion diffusion pathways in the crystal lattices are optimized when the amount of I is 1 mol.

As is clear from the comparison of EXAMPLES B12, B 17, B31, B32, and B33 with one another, the solid electrolyte materials have higher ion conductivity when M is Y, Gd, Tb, or Sm. The solid electrolyte materials have even higher ion conductivity when M is Y, Gd, or Tb.

The batteries of EXAMPLES B1 to B33 were charged and discharged at room temperature.

Hydrogen sulfide was not generated because the solid electrolyte materials of EXAMPLES B1 to B33 did not contain sulfur.

Solid electrolyte materials of EXAMPLES C may be represented by the compositional formula (3) described hereinabove.

<EXAMPLE C1>

(Preparation of Solid Electrolyte Material)

In a dry argon atmosphere, LiCl, $YbCl_3$, and $ZrCl_4$ as ingredient powders were provided in a molar ratio of $LiCl:YbCl_3:ZrCl_4$ = 2.9:0.9:0.1. These ingredient powders were crushed and mixed together in an agate mortar. The mixed powder obtained was milled with a planetary ball mill at 500 rpm for 12 hours. A powder of a solid electrolyte material of EXAMPLE 1 was thus obtained. The solid electrolyte material of EXAMPLE C1 had a composition represented by $Li_{2.9}Yb_{0.9}Zr_{0.1}Cl_6$.

(Evaluation of Ion Conductivity)

The ion conductivity of the solid electrolyte material of EXAMPLE C1 was evaluated in the same manner as in EXAMPLE A1.

The ion conductivity of the solid electrolyte material of EXAMPLE C1 measured at 25°C was $3.76 \times 10^{-4}$ S/cm.

(X-Ray Diffractometry)

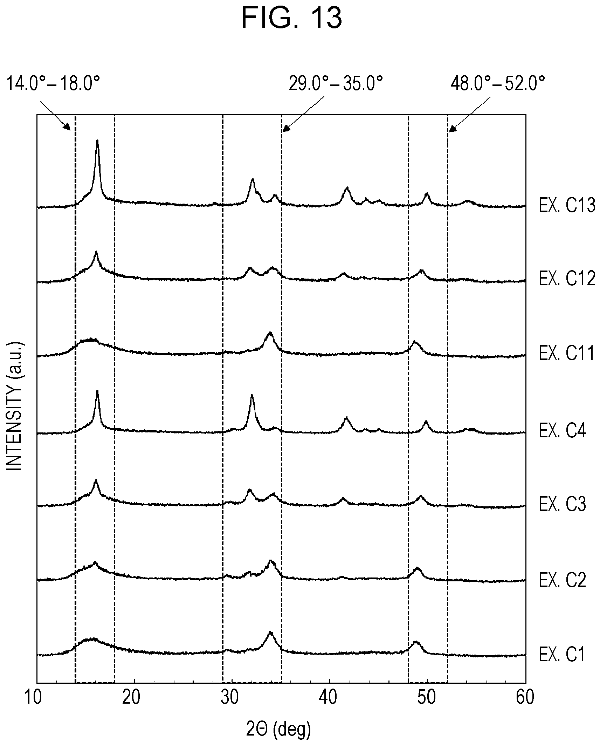

Fig. 13 is a graph illustrating an X-ray diffraction pattern of the solid electrolyte material of EXAMPLE C1. The results illustrated in Fig. 13 were measured in the same manner as in EXAMPLE A1.

The X-ray diffraction pattern of the solid electrolyte material of EXAMPLE C1 had at least one peak in the range of diffraction angles $2\theta$ of greater than or equal to 14.0° and less than or equal to 18.0°, at least one peak in the range of diffraction angles $2\theta$ of greater than or equal to 29.0° and less than or equal to 35.0°, and at least one peak in the range of diffraction angles $2\theta$ of greater than or equal to 48.0° and less than or equal to 52.0°. Thus, the solid electrolyte material of EXAMPLE C1 contained an eighth crystal phase. The angles of the X-ray diffraction peaks observed of the eighth crystal phase are described in Table 9.

(Fabrication of Battery)

A battery of EXAMPLE C1 was obtained in the same manner as in EXAMPLE A1, except that the solid electrolyte material of EXAMPLE C1 was used in place of the solid electrolyte material of EXAMPLE A1.

(Charging-Discharging Test)

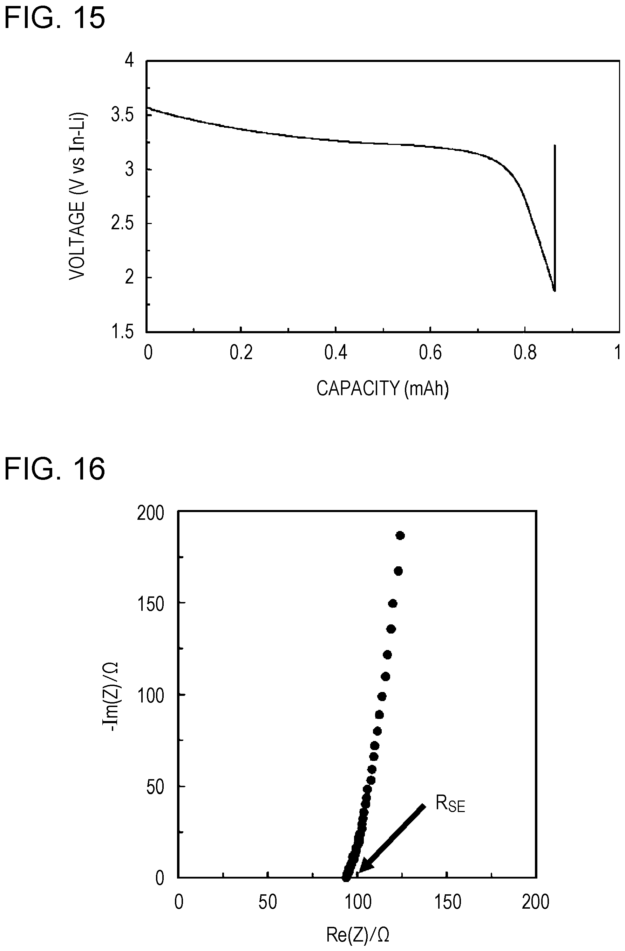

Fig. 15 is a graph illustrating initial discharge characteristics of the battery of EXAMPLE C1. Initial charge-discharge characteristics were measured in the same manner as in EXAMPLE A1.

As a result of the charging-discharging test, the battery of EXAMPLE C1 had an initial discharge capacity of 0.86 mAh.

<EXAMPLES C2 to C24>

(Preparation of Solid Electrolyte Materials)

In EXAMPLE C2, LiCl, $YbCl_3$, and $ZrCl_4$ as ingredient powders were provided in a molar ratio of $LiCl:YbCl_3:ZrCl_4$ = 2.7:0.7:0.3.

In EXAMPLE C3, LiCl, $YbCl_3$, and $ZrCl_4$ as ingredient powders were provided in a molar ratio of $LiCl:YbCl_3:ZrCl_4$ = 2.5:0.5:0.5.

In EXAMPLE C4, LiCl, $YbCl_3$, and $ZrCl_4$ as ingredient powders were provided in a molar ratio of $LiCl:YbCl_3:ZrCl_4$ = 2.1:0.1:0.9.

In EXAMPLE C5, LiCl, LiBr, $YbCl_3$, and $ZrCl_4$ as ingredient powders were provided in a molar ratio of $LiCl:LiBr:YbCl_3:ZrCl_4$ = 0.5:2:0.5:0.5.

In EXAMPLE C6, LiBr, $YbCl_3$, $YbBr_3$, and $ZrCl_4$ as ingredient powders were provided in a molar ratio of $LiBr:YbCl_3:YbBr_3:ZrCl_4$ = 2.5:0.33:0.17:0.5.

In EXAMPLE C7, LiBr, $YbBr_3$, and $ZrCl_4$ as ingredient powders were provided in a molar ratio of $LiBr:YbBr_3:ZrCl_4$ = 2.5:0.5:0.5.

In EXAMPLE C8, LiBr, $YbBr_3$, and $ZrBr_4$ as ingredient powders were provided in a molar ratio of $LiBr:YbBr_3:ZrBr_4$ = 2.5:0.5:0.5.

In EXAMPLE C9, LiCl, LiBr, LiI, $YbCl_3$, and $ZrCl_4$ as ingredient powders were provided in a molar ratio of $LiCl:LiBr:LiI:YbCl_3:ZrCl_4$ = 0.5:1:1:0.5:0.5.

In EXAMPLE C10, LiBr, LiI, $YbCl_3$, $YbBr_3$, and $ZrCl_4$ as ingredient powders were provided in a molar ratio of $LiBr:LiI:YbCl_3:YbBr_3:ZrCl_4$ = 0.5:2:0.33:0.17:0.5.

In EXAMPLE C11, LiCl, $YbCl_3$, and $HfCl_4$ as ingredient powders were provided in a molar ratio of $LiCl:YbCl_3:HfCl_4$ = 2.9:0.9:0.1.

In EXAMPLE C12, LiCl, $YbCl_3$, and $HfCl_4$ as ingredient powders were provided in a molar ratio of $LiCl:YbCl_3:HfCl_4$ = 2.5:0.5:0.5.

In EXAMPLE C13, LiCl, $YbCl_3$, and $HfCl_4$ as ingredient powders were provided in a molar ratio of $LiCl:YbCl_3:HfCl_4$ = 2.1:0.1:0.9.

In EXAMPLE C14, LiCl, LiBr, $YbCl_3$, and $HfCl_4$ as ingredient powders were provided in a molar ratio of $LiCl:LiBr:YbCl_3:HfCl_4$ = 0.5:2:0.5:0.5.

In EXAMPLE C15, LiBr, $YbCl_3$, $YbBr_3$, and $HfCl_4$ as ingredient powders were provided in a molar ratio of $LiBr:YbCl_3:YbBr_3:HfCl_4$ = 2.5:0.33:0.17:0.5.

In EXAMPLE C16, LiCl, $YbCl_3$, and $ZrCl_4$ as ingredient powders were provided in a molar ratio of $LiCl:YbCl_3:ZrCl_4$ = 2.4:0.8:0.3.

In EXAMPLE C17, LiCl, $YbCl_3$, and $ZrCl_4$ as ingredient powders were provided in a molar ratio of $LiCl:YbCl_3:ZrCl_4$ = 2.3:0.7:0.4.

In EXAMPLE C18, LiCl, $YbCl_3$, and $ZrCl_4$ as ingredient powders were provided in a molar ratio of $LiCl:YbCl_3:ZrCl_4$ = 2.2:0.6:0.5.

In EXAMPLE C19, LiCl, $YbCl_3$, and $ZrCl_4$ as ingredient powders were provided in a molar ratio of $LiCl:YbCl_3:ZrCl_4$ = 2.9:0.5:0.4.

In EXAMPLE C20, LiCl, $YbCl_3$, and $ZrCl_4$ as ingredient powders were provided in a molar ratio of $LiCl:YbCl_3:ZrCl_4$ = 2.8:0.4:0.5.

In EXAMPLE C21, LiCl, $YbCl_3$, and $ZrCl_4$ as ingredient powders were provided in a molar ratio of $LiCl:YbCl_3:ZrCl_4$ = 2.7:0.3:0.6.

In EXAMPLE C22, LiCl, $YbCl_3$, and $ZrCl_4$ as ingredient powders were provided in a molar ratio of $LiCl:YbCl_3:ZrCl_4$ = 2.5:0.7:0.35.

In EXAMPLE C23, LiCl, $YbCl_3$, and $ZrCl_4$ as ingredient powders were provided in a molar ratio of $LiCl:YbCl_3:ZrCl_4$ = 2.4:0.6:0.45.

In EXAMPLE C24, LiCl, $YbCl_3$, and $ZrCl_4$ as ingredient powders were provided in a molar ratio of $LiCl:YbCl_3:ZrCl_4$ = 2.45:0.55:0.5.

Solid electrolyte materials of EXAMPLES C2 to C24 were obtained in the same manner as in EXAMPLE C1 except for the above differences.

(Evaluation of Ion Conductivity)

The ion conductivity of the solid electrolyte materials of EXAMPLES C2 to C24 was measured in the same manner as in EXAMPLE A1. The measurement results are described in Table 8.

(X-Ray Diffractometry)

X-ray diffraction patterns of the solid electrolyte materials of EXAMPLES C2 to C15 were measured in the same manner as in EXAMPLE A1.

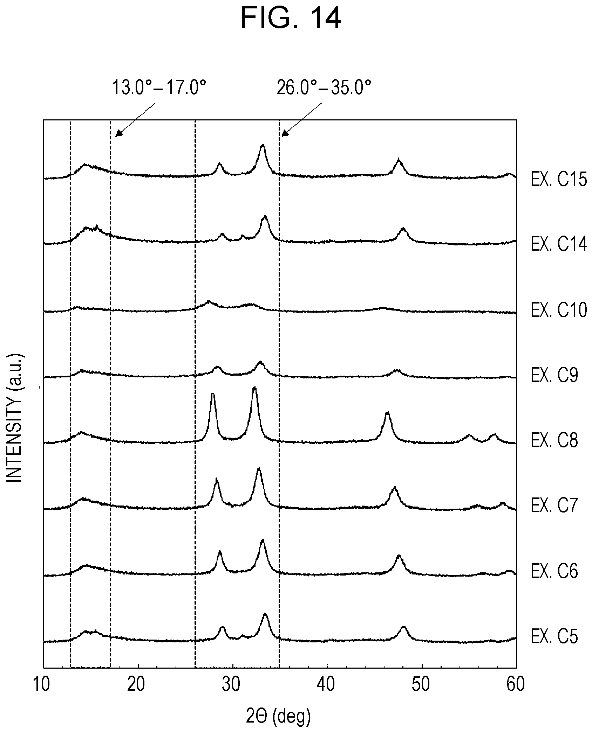

Fig. 13 is a graph illustrating the X-ray diffraction patterns of the solid electrolyte materials of EXAMPLES C2 to C4, and C11 to C13. Fig. 14 is a graph illustrating the X-ray diffraction patterns of the solid electrolyte materials of EXAMPLES C5 to C10, C14, and C15. The materials of EXAMPLES C2 to C4, and C11 to C13 contained an eighth crystal phase. The materials of EXAMPLES C5 to C10, C14, and C15 contained a ninth crystal phase. The angles of the peaks observed of the eighth and the ninth crystal phases are described in Tables 9 and 10, respectively.

(Charging-Discharging Test)

Batteries of EXAMPLES C2 to C24 were obtained in the same manner as in EXAMPLE A1 using the solid electrolyte materials of EXAMPLES C2 to C24. The batteries of EXAMPLES C2 to C24 were subjected to the charging-discharging test in the same manner as in EXAMPLE A1. As a result, the batteries of EXAMPLES C2 to C24 were charged and discharged satisfactorily similarly to the battery of EXAMPLE C1.

<COMPARATIVE EXAMPLES C1 and C2>

The solid electrolyte materials of COMPARATIVE EXAMPLES A1 and A2 were used as solid electrolyte materials of COMPARATIVE EXAMPLES C1 and C2, respectively.
The compositions of the solid electrolyte materials of EXAMPLES C and COMPARATIVE EXAMPLES C are described in Table 8. Table 8 also describes the values corresponding to a, b, x, and y, and the element M in the compositional formula (3).

[Table 8]

| | Composition | M | a | b | x | y | Ion conductivity (S/cm) |
|---|---|---|---|---|---|---|---|
| EX. C1 | $Li_{2.9}Yb_{0.9}Zr_{0.1}Cl_6$ | Zr | 0.9 | 0.1 | 0 | 0 | $3.76 \times 10^{-4}$ |
| EX. C2 | $Li_{2.7}Yb_{0.7}Zr_{0.3}Cl_6$ | Zr | 0.7 | 0.3 | 0 | 0 | $6.14 \times 10^{-4}$ |
| EX. C3 | $Li_{2.5}Yb_{0.5}Zr_{0.5}Cl_6$ | Zr | 0.5 | 0.5 | 0 | 0 | $8.57 \times 10^{-4}$ |
| EX. C4 | $Li_{2.1}Yb_{0.1}Zr_{0.9}Cl_6$ | Zr | 0.1 | 0.9 | 0 | 0 | $8.36 \times 10^{-4}$ |
| EX. C5 | $Li_{2.5}Yb_{0.5}Zr_{0.5}Cl_4Br_2$ | Zr | 0.5 | 0.5 | 2 | 0 | $5.12 \times 10^{-4}$ |
| EX. C6 | $Li_{2.5}Yb_{0.5}Zr_{0.5}Cl_3Br_3$ | Zr | 0.5 | 0.5 | 3 | 0 | $3.69 \times 10^{-4}$ |
| EX. C7 | $Li_{2.5}Yb_{0.5}Zr_{0.5}Cl_2Br_4$ | Zr | 0.5 | 0.5 | 4 | 0 | $2.87 \times 10^{-4}$ |
| EX. C8 | $Li_{2.5}Yb_{0.5}Zr_{0.5}Br_6$ | Zr | 0.5 | 0.5 | 6 | 0 | $1.23 \times 10^{-4}$ |
| EX. C9 | $Li_{2.5}Yb_{0.5}Zr_{0.5}Cl_4Br_1I_1$ | Zr | 0.5 | 0.5 | 1 | 1 | $7.13 \times 10^{-4}$ |
| EX. C10 | $Li_{2.5}Yb_{0.5}Zr_{0.5}Cl_3Br_1I_2$ | Zr | 0.5 | 0.5 | 1 | 2 | $1.13 \times 10^{-3}$ |
| EX. C1 1 | $Li_{2.9}Yb_{0.9}Hf_{0.1}Cl_6$ | Hf | 0.9 | 0.1 | 0 | 0 | $3.88 \times 10^{-4}$ |
| EX. C12 | $Li_{2.5}Yb_{0.5}Hf_{0.5}Cl_6$ | Hf | 0.5 | 0.5 | 0 | 0 | $6.94 \times 10^{-4}$ |
| EX. C13 | $Li_{2.1}Yb_{0.1}Hf_{0.9}Cl_6$ | Hf | 0.1 | 0.9 | 0 | 0 | $4.34 \times 10^{-4}$ |
| EX. C14 | $Li_{2.5}Yb_{0.5}Hf_{0.5}Cl_4Br_2$ | Hf | 0.5 | 0.5 | 2 | 0 | $4.46 \times 10^{-4}$ |
| EX. C15 | $Li_{2.5}Yb_{0.5}Hf_{0.5}Cl_3Br_3$ | Hf | 0.5 | 0.5 | 3 | 0 | $3.49 \times 10^{-4}$ |
| EX. C16 | $Li_{2.4}Yb_{0.8}Zr_{0.3}Cl_6$ | Zr | 0.8 | 0.3 | 0 | 0 | $6.39 \times 10^{-4}$ |

(continued)

|  | Composition | M | a | b | x | y | Ion conductivity (S/cm) |
|---|---|---|---|---|---|---|---|
| EX. C17 | $Li_{2.3}Yb_{0.7}Zr_{0.4}Cl_6$ | Zr | 0.7 | 0.4 | 0 | 0 | $7.21 \times 10^{-4}$ |
| EX. C18 | $Li_{2.2}Yb_{0.6}Zr_{0.5}Cl_6$ | Zr | 0.6 | 0.5 | 0 | 0 | $7.97 \times 10^{-4}$ |
| EX. C19 | $Li_{2.9}Yb_{0.5}Zr_{0.4}Cl_6$ | Zr | 0.5 | 0.4 | 0 | 0 | $4.07 \times 10^{-4}$ |
| EX. C20 | $Li_{2.8}Yb_{0.4}Zr_{0.5}Cl_6$ | Zr | 0.4 | 0.5 | 0 | 0 | $4.24 \times 10^{-4}$ |
| EX. C21 | $Li_{2.7}Yb_{0.3}Zr_{0.6}Cl_6$ | Zr | 0.3 | 0.6 | 0 | 0 | $4.69 \times 10^{-4}$ |
| EX. C22 | $Li_{2.5}Yb_{0.7}Zr_{0.35}Cl_6$ | Zr | 0.7 | 0.35 | 0 | 0 | $8.28 \times 10^{-4}$ |
| EX. C23 | $Li_{2.4}Yb_{0.6}Zr_{0.45}Cl_6$ | Zr | 0.6 | 0.45 | 0 | 0 | $8.65 \times 10^{-4}$ |
| EX. C24 | $Li_{2.45}Yb_{0.55}Zr_{0.5}Cl_6$ | Zr | 0.55 | 0.5 | 0 | 0 | $9.54 \times 10^{-4}$ |
| COMP. EX. C1 | $Li_3YbCl_6$ | - | 1 | 0 | 0 | 0 | $4.98 \times 10^{-5}$ |
| COMP. EX. C2 | $Li_3YbBr_6$ | - | 1 | 0 | 6 | 0 | $3.31 \times 10^{-5}$ |

[Table 9]

|  | Angles of distinct diffraction peaks assigned to eighth crystal phase (°) | | |
|---|---|---|---|
|  | 14.0° to 18.0° | 29.0° to 35.0° | 48.0° to 52.0° |
| EX. C1 | 15.85 | 33.85 | 48.87 |
| EX. C2 | 16.00 | 31.81 | 48.91 |
| EX. C3 | 16.08 | 31.77 | 49.29 |
| EX. C4 | 16.22 | 32.04 | 49.86 |
| EX. C1 1 | 15.51 | 33.85 | 48.64 |
| EX. C12 | 16.08 | 31.85 | 49.29 |
| EX. C13 | 16.22 | 32.11 | 49.97 |

[Table 10]

|  | Angles of distinct diffraction peaks assigned to ninth crystal phase (°) | |
|---|---|---|
|  | 26.0° to 35.0° | 13.0° to 17.0° |
| EX. C5 | 28.92, 33.36 | 14.53 |
| EX. C6 | 28.66, 33.20 | 14.68 |
| EX. C7 | 28.28, 32.83 | 14.18 |
| EX. C8 | 27.83, 32.38 | 13.99 |
| EX. C9 | 28.36, 32.98 | 14.15 |
| EX. C10 | 27.41, 31.96 | 13.77 |
| EX. C14 | 28.86, 33.40 | 14.49 |
| EX. C15 | 28.62, 33.17 | 14.34 |

<Discussion>

The solid electrolyte materials of EXAMPLES C1 to C24 have a high lithium ion conductivity of greater than or equal to $5.0 \times 10^{-5}$ S/cm near room temperature.

As is clear from the comparison of EXAMPLES C1 to C24 with COMPARATIVE EXAMPLES C1 and C2, the solid electrolyte materials that are represented by the compositional formula (3) and contain M in addition to Li, Yb, and X have markedly high ion conductivity as compared to when the solid electrolyte materials do not contain M. This is probably because the incorporation of M into the solid electrolyte material facilitates the occurrence of lithium ion diffusion pathways. Incidentally, M in EXAMPLES was Zr or Hf.

As is clear from the comparison of EXAMPLES C2 to C4, C12, and C13 with EXAMPLES C1 and C11, the solid electrolyte materials have higher ion conductivity when greater than or equal to 30% of Yb is substituted with M (that is, $a \leq 0.7$ and $b \geq 0.3$). This is probably because a significant amount of lithium ion vacancies is formed in the crystal lattices to facilitate the diffusion of lithium ions.

As is clear from the comparison of EXAMPLE C3 with EXAMPLES C2 and C4 and the comparison of EXAMPLE C12 with EXAMPLE C13, the solid electrolyte materials have markedly high ion conductivity when 50% of Yb is substituted with M (that is, $a = 0.5$ and $b = 0.5$). This is probably because the ratio is optimized between the amount of lithium ions and the amount of lithium ion vacancies in the crystal lattices.

As is clear from the comparison of EXAMPLES C3, C5 to C8, C12, C14, and C15 with one another, the solid electrolyte materials satisfying $y = 0$ have higher ion conductivity with decreasing value of x. This is probably because the size of the lithium ion conductive pathways in the crystal lattices is narrowed by the increase in Br having a larger ionic radius than Cl, and the diffusion of lithium ions is inhibited.

As is clear from the comparison of EXAMPLES C9 and C10 with EXAMPLES C5 and C6, the solid electrolyte materials have higher ion conductivity when $y > 0$ is satisfied. This is probably because the diffusion of lithium ions is facilitated by the introduction of I having high polarizability into the crystal lattices.

As is clear from EXAMPLES C16 to C24, the solid electrolyte materials have high ion conductivity even when M does not substitute for the same sites as Yb in the crystal lattices (that is, $a + b > 1$) or even when Li occupies the same sites as Yb (that is, $a + b < 1$).

As is clear from the comparison of EXAMPLES C16 to C18, and C22 to C24 with EXAMPLES C19 to C21, the solid electrolyte materials satisfying $a + b > 1$ have higher ion conductivity than when $a + b < 1$ is satisfied. This is probably because lithium ion diffusion pathways are formed easily in the crystal lattices when $a + b > 1$ is satisfied.

As is clear from the comparison of EXAMPLES C22 to C24 with EXAMPLES C16 to C18, the solid electrolyte materials satisfying $a + b = 1.05$ have higher ion conductivity than when $a + b = 1.1$ is satisfied. This is probably because the amount of lithium ions in the crystal lattices is optimized.

The batteries of EXAMPLES C1 to C24 were charged and discharged at room temperature.

Hydrogen sulfide was not generated because the solid electrolyte materials of EXAMPLES C1 to C24 did not contain sulfur.

Solid electrolyte materials of EXAMPLES D may be represented by the compositional formula (4) described hereinabove.

<EXAMPLE D1>

(Preparation of Solid Electrolyte Material)

In a dry argon atmosphere, LiCl, LiBr, $YbCl_3$, $YCl_3$, and $ZnCl_2$ as ingredient powders were provided in a molar ratio of $LiCl:LiBr:YbCl_3:YCl_3:ZnCl_2 = 2.15:1:0.65:0.2:0.15$. These ingredient powders were crushed and mixed together in an agate mortar. The mixed powder obtained was placed into an alumina crucible and was heat-treated in a dry argon atmosphere at 550°C for 1 hour. The heat-treated product obtained was crushed in an agate mortar. A powder of a solid electrolyte material of EXAMPLE D1 was thus obtained. The solid electrolyte material of EXAMPLE 1 had a composition represented by $Li_{3.15}Yb_{0.65}Y_{0.2}Zn_{0.15}Br_1Cl_5$.

(Evaluation of Ion Conductivity)

The ion conductivity of the solid electrolyte material of EXAMPLE D1 was evaluated in the same manner as in EXAMPLE A1.

Fig. 16 is a graph illustrating the Cole-Cole plot obtained by the AC impedance measurement of the solid electrolyte material of EXAMPLE D1.

The ion conductivity of the solid electrolyte material of EXAMPLE D1 measured at 25°C was $6.25 \times 10^{-4}$ S/cm.

(X-Ray Diffractometry)

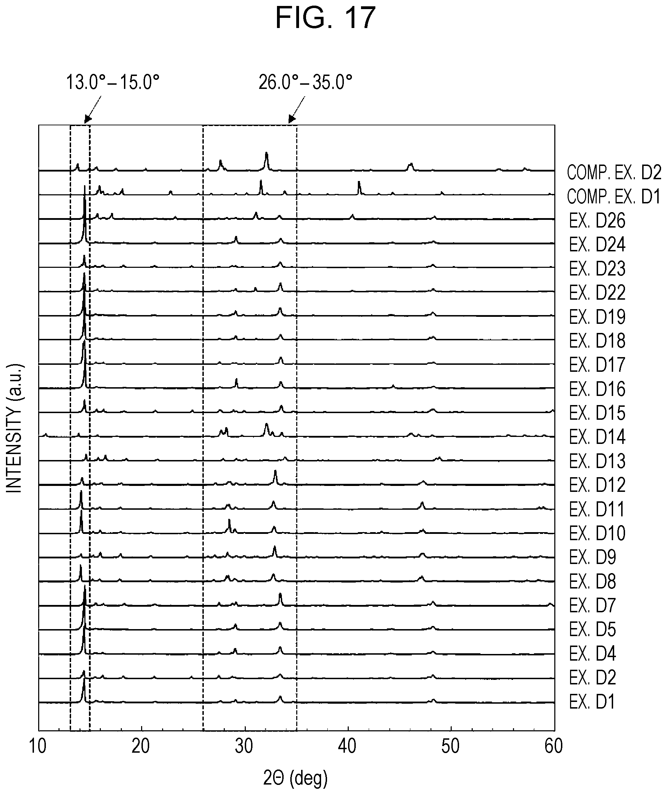

Fig. 17 is a graph illustrating an X-ray diffraction pattern of the solid electrolyte material of EXAMPLE D1. The results illustrated in Fig. 17 were measured in the same manner as in EXAMPLE A1.

The X-ray diffraction pattern of the solid electrolyte material of EXAMPLE D1 had one peak in the range of greater than or equal to 13.0° and less than or equal to 15.0°, and two peaks in the range of greater than or equal to 26.0° and less than or equal to 35.0°. Thus, the solid electrolyte material of EXAMPLE D1 contained an eleventh crystal phase (namely, a monoclinic crystal). The angles of the distinct X-ray diffraction peaks observed of the eleventh crystal phase are described in Table 12.

(Fabrication of Battery)

A battery of EXAMPLE D 1 was obtained in the same manner as in EXAMPLE A1, except that the solid electrolyte material of EXAMPLE D1 was used in place of the solid electrolyte material of EXAMPLE A1.

(Charging-Discharging Test)

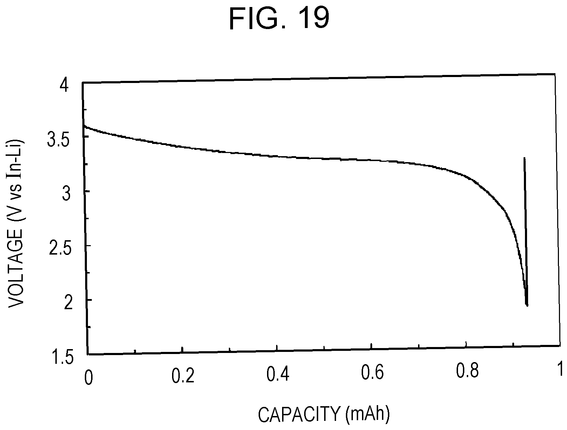

Fig. 19 is a graph illustrating initial discharge characteristics of the battery of EXAMPLE D1. Initial charge-discharge characteristics were measured in the same manner as in EXAMPLE A1.

As a result of the charging-discharging test, the battery of EXAMPLE D1 had an initial discharge capacity of 0.93 mAh.

<EXAMPLES D2 to D27>

(Preparation of Solid Electrolyte Materials)

In EXAMPLE D2, LiCl, LiBr, $YbCl_3$, $YCl_3$, and $MgCl_2$ as ingredient powders were provided in a molar ratio of $LiCl:LiBr:YbCl_3:YCl_3:MgCl_2$ = 2.15:1:0.65:0.2:0.15.

In EXAMPLE D3, LiCl, LiBr, $YbCl_3$, $YCl_3$, and $CaCl_2$ as ingredient powders were provided in a molar ratio of $LiCl:LiBr:YbCl_3:YCl_3:CaCl_2$ = 2.15:1:0.65:0.2:0.15.

In EXAMPLE D4, LiCl, LiBr, $YbCl_3$, $YCl_3$, and $ZnCl_2$ as ingredient powders were provided in a molar ratio of $LiCl:LiBr:YbCl_3:YCl_3:ZnCl_2$ = 1.8:1:0.7:0.3:0.1.

In EXAMPLE D5, LiCl, LiBr, $YbCl_3$, $YCl_3$, and $MgCl_2$ as ingredient powders were provided in a molar ratio of $LiCl:LiBr:YbCl_3:YCl_3:MgCl_2$ = 1.8:1:0.7:0.3:0.1.

In EXAMPLE D6, LiCl, LiBr, $YbCl_3$, $YCl_3$, and $CaCl_2$ as ingredient powders were provided in a molar ratio of $LiCl:LiBr:YbCl_3:YCl_3:CaCl_2$ = 1.8:1:0.7:0.3:0.1.

In EXAMPLE D7, LiCl, LiBr, $YbCl_3$, $YCl_3$, and $SrCl_2$ as ingredient powders were provided in a molar ratio of $LiCl:LiBr:YbCl_3:YCl_3:SrCl_2$ = 1.8:1:0.7:0.3:0.1.

In EXAMPLE D8, LiCl, LiBr, $YbCl_3$, $YCl_3$, and $ZnCl_2$ as ingredient powders were provided in a molar ratio of $LiCl:LiBr:YbCl_3:YCl_3:ZnCl_2$ = 0.2:3:0.7:0.1:0.2.

In EXAMPLE D9, LiCl, LiBr, $YbCl_3$, $InCl_3$, and $ZnCl_2$ as ingredient powders were provided in a molar ratio of $LiCl:LiBr:YbCl_3:InCl_3:ZnCl_2$ = 0.2:3:0.7:0.1:0.2.

In EXAMPLE D10, LiCl, LiBr, $YbCl_3$, $TbCl_3$, and $ZnCl_2$ as ingredient powders were provided in a molar ratio of $LiCl:LiBr:YbCl_3:TbCl_3:ZnCl_2$ = 0.2:3:0.7:0.1:0.2.

In EXAMPLE D11, LiCl, LiBr, $YbCl_3$, $GdCl_3$, and $ZnCl_2$ as ingredient powders were provided in a molar ratio of $LiCl:LiBr:YbCl_3:GdCl_3:ZnCl_2$ = 0.2:3:0.7:0.1:0.2.

In EXAMPLE D12, LiCl, LiBr, $YbCl_3$, $SmCl_3$, and $ZnCl_2$ as ingredient powders were provided in a molar ratio of $LiCl:LiBr:YbCl_3:SmCl_3:ZnCl_2$ = 0.2:3:0.7:0.1:0.2.

In EXAMPLE D13, LiCl, $YbCl_3$, $YCl_3$, and $ZnCl_2$ as ingredient powders were provided in a molar ratio of $LiCl:YbCl_3:YCl_3:ZnCl_2$ = 3.2:0.7:0.1:0.2.

In EXAMPLE D14, LiBr, $YbBr_3$, $YBr_3$, and $ZnBr_2$ as ingredient powders were provided in a molar ratio of $LiBr:YbBr_3:YBr_3:ZnBr_2$ = 3.2:0.7:0.1:0.2.

In EXAMPLE D15, LiCl, LiBr, $YbCl_3$, $YCl_3$, and $ZnCl_2$ as ingredient powders were provided in a molar ratio of $LiCl:LiBr:YbCl_3:YCl_3:ZnCl_2$ = 2.2:1:0.7:0.1:0.2.

In EXAMPLE D16, LiCl, LiBr, $YbCl_3$, $YCl_3$, and $ZnCl_2$ as ingredient powders were provided in a molar ratio of $LiCl:LiBr:YbCl_3:YCl_3:ZnCl_2$ = 2.1:1:0.65:0.25:0.1.

In EXAMPLE D17, LiCl, LiBr, $YbCl_3$, $YCl_3$, and $ZnCl_2$ as ingredient powders were provided in a molar ratio of $LiCl:LiBr:YbCl_3:YCl_3:ZnCl_2$ = 2.1:1:0.8:0.1:0.1.

In EXAMPLE D18, LiCl, LiBr, $YbCl_3$, $YCl_3$, and $ZnCl_2$ as ingredient powders were provided in a molar ratio of $LiCl:LiBr:YbCl_3:YCl_3:ZnCl_2$ = 2.1:1:0.7:0.2:0.1.

In EXAMPLE D19, LiCl, LiBr, $YbCl_3$, $YCl_3$, and $ZnCl_2$ as ingredient powders were provided in a molar ratio of $LiCl:LiBr:YbCl_3:YCl_3:ZnCl_2$ = 2.05:1:0.7:0.25:0.05.

In EXAMPLE D20, LiCl, LiBr, YbCl$_3$, YCl$_3$, and ZnCl$_2$ as ingredient powders were provided in a molar ratio of LiCl:LiBr:YbCl$_3$:YCl$_3$:ZnCl$_2$ = 1.6:1:0.7:0.3:0.2.

In EXAMPLE D21, LiCl, LiBr, YbCl$_3$, YCl$_3$, and ZnCl$_2$ as ingredient powders were provided in a molar ratio of LiCl:LiBr:YbCl$_3$:YCl$_3$:ZnCl$_2$ = 1.7:1:0.7:0.3:0.15.

In EXAMPLE D22, LiCl, LiBr, YbCl$_3$, YCl$_3$, and ZnCl$_2$ as ingredient powders were provided in a molar ratio of LiCl:LiBr:YbCl$_3$:YCl$_3$:ZnCl$_2$ = 1.9:1:0.7:0.3:0.05.

In EXAMPLE D23, LiCl, LiBr, YbCl$_3$, YCl$_3$, and MgCl$_2$ as ingredient powders were provided in a molar ratio of LiCl:LiBr:YbCl$_3$:YCl$_3$:MgCl$_2$ = 2.1:1:0.65:0.25:0.1.

In EXAMPLE D24, LiCl, LiBr, YbCl$_3$, YCl$_3$, and MgCl$_2$ as ingredient powders were provided in a molar ratio of LiCl:LiBr:YbCl$_3$:YCl$_3$:MgCl$_2$ = 1.7:1:0.7:0.3:0.15.

In EXAMPLE D25, LiCl, LiBr, YbCl$_3$, YCl$_3$, and CaCl$_2$ as ingredient powders were provided in a molar ratio of LiCl:LiBr:YbCl$_3$:YCl$_3$:CaCl$_2$ = 2.1:1:0.65:0.25:0.1.

In EXAMPLE D26, LiCl, LiBr, YbCl$_3$, YCl$_3$, and CaCl$_2$ as ingredient powders were provided in a molar ratio of LiCl:LiBr:YbCl$_3$:YCl$_3$:CaCl$_2$ = 1.9:1:0.7:0.3:0.05.

In EXAMPLE D27, LiCl, LiBr, YbCl$_3$, YCl$_3$, and CaCl$_2$ as ingredient powders were provided in a molar ratio of LiCl:LiBr:YbCl$_3$:YCl$_3$:CaCl$_2$ = 1.7:1:0.7:0.3:0.15.

In EXAMPLES D2 to D8, D10 to D12, and D 14 to D27, the mixture of the ingredient powders was heat-treated in a dry argon atmosphere at 550°C for 1 hour.

In EXAMPLE D9, the mixture of the ingredient powders was heat-treated in a dry argon atmosphere at 350°C for 5 hours.

In EXAMPLE D13, the mixture of the ingredient powders was heat-treated in a dry argon atmosphere at 600°C for 1 hour.

Solid electrolyte materials of EXAMPLES D2 to D27 were obtained in the same manner as in EXAMPLE D1 except for the above differences.

(Evaluation of Ion Conductivity)

The ion conductivity of the solid electrolyte materials of EXAMPLES D2 to D27 was measured in the same manner as in EXAMPLE A1. The measurement results are described in Table 11.

(X-Ray Diffractometry)

X-ray diffraction patterns of the solid electrolyte materials of EXAMPLES D2 to D27 were measured in the same manner as in EXAMPLE A1.

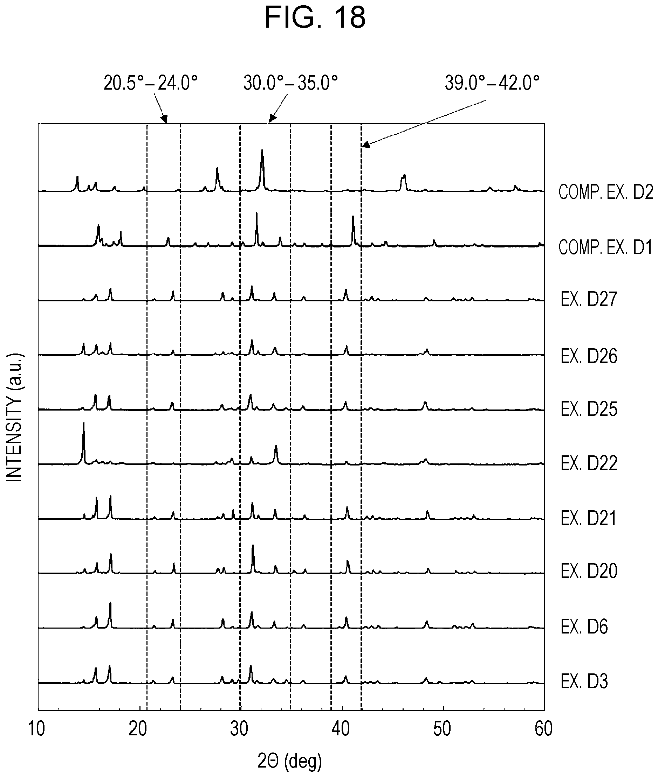

Figs. 17 and 18 are graphs illustrating the X-ray diffraction patterns of the solid electrolyte materials of EXAMPLES D2 to D27. Specifically, Fig. 17 is a graph illustrating the X-ray diffraction patterns of the solid electrolyte materials of EXAMPLES D2, D4, D5, D7 to D19, D22 to D24, and D26. Fig. 18 is a graph illustrating the X-ray diffraction patterns of the solid electrolyte materials of EXAMPLES D3, D6, D20 to D22, and D25 to D27. The materials of EXAMPLES D2, D4, D5, D7 to D19, D23, and D24 contained an eleventh crystal phase. The materials of EXAMPLES D3, D6, D20, D21, and D25 contained a twelfth crystal phase. The materials of EXAMPLES D22 and D26 contained an eleventh crystal phase and a twelfth crystal phase. The angles of the peaks observed of the eleventh and the twelfth crystal phases are described in Tables 12 and 13, respectively.

(Charging-Discharging Test)

The solid electrolyte materials of COMPARATIVE EXAMPLES A1 and A2 were used as solid electrolyte materials of COMPARATIVE EXAMPLES D1 and D2, respectively.

Figs. 17 and 18 are graphs illustrating X-ray diffraction patterns of the solid electrolyte materials of COMPARATIVE EXAMPLES D1 and D2. The solid electrolyte material of COMPARATIVE EXAMPLE D2 contained an eleventh crystal phase. The solid electrolyte material of COMPARATIVE EXAMPLE D1 had a structure similar to Li$_3$YbCl$_6$ disclosed in ICSD Collection Code 50152. The angles of the X-ray diffraction peaks of the eleventh crystal phase that were observed in COMPARATIVE EXAMPLE D2 are described in Table 12.

The compositions of the solid electrolyte materials of EXAMPLES D and COMPARATIVE EXAMPLES D are described in Table 11. Table 11 also describes the values corresponding to a, b, c, x, and y, and the elements M1 and M2 in the compositional formula (4).

[Table 11]

| | | Composition | M1 | M2 | a | b | c | X | Ion conductivity (S/cm) |
|---|---|---|---|---|---|---|---|---|---|
| | EX. D1 | $Li_{3.15}Yb_{0.65}Y_{0.2}Zn_{0.15}BnCl_5$ | Y | Zn | 0.65 | 0.2 | 0.15 | 1 | $6.25\times10^{-4}$ |
| | EX. D2 | $Li_{3.15}Yb_{0.65}Y_{0.2}Mg_{0.15}Br_1Cl_5$ | Y | Mg | 0.65 | 0.2 | 0.15 | 1 | $5.19\times10^{-4}$ |
| | EX. D3 | $Li_{3.15}Yb_{0.65}Y_{0.2}Ca_{0.15}Br_1Cl_5$ | Y | Ca | 0.65 | 0.2 | 0.15 | 1 | $4.25\times10^{-4}$ |
| | EX. D4 | $Li_{2.8}Yb_{0.7}Y_{0.3}Zn_{0.1}Br_1Cl_5$ | Y | Zn | 0.7 | 0.3 | 0.1 | 1 | $9.74\times10^{-4}$ |
| | EX. D5 | $Li_{2.8}Yb_{0.7}Y_{0.3}Mg_{0.1}Br_1Cl_5$ | Y | Mg | 0.7 | 0.3 | 0.1 | 1 | $7.61\times10^{-4}$ |
| | EX. D6 | $Li_{2.8}Yb_{0.7}Y_{0.3}Ca_{0.1}Br_1Cl_5$ | Y | Ca | 0.7 | 0.3 | 0.1 | 1 | $6.00\times10^{-4}$ |
| | EX. D7 | $Li_{2.8}Yb_{0.7}Y_{0.3}Sr_{0.1}Br_1Cl_5$ | Y | Sr | 0.7 | 0.3 | 0.1 | 1 | $1.03\times10^{-3}$ |
| | EX. D8 | $Li_{3.2}Yb_{0.7}Y_{0.1}Zn_{0.2}Br_3Cl_3$ | Y | Zn | 0.7 | 0.1 | 0.2 | 3 | $6.75\times10^{-4}$ |
| | EX. D9 | $Li_{3.2}Yb_{0.7}In_{0.1}Zn_{0.2}Br_3Cl_3$ | In | Zn | 0.7 | 0.1 | 0.2 | 3 | $4.77\times10^{-4}$ |
| | EX. D10 | $Li_{3.2}Yb_{0.7}Tb_{0.1}Zn_{0.2}Br_3Cl_3$ | Tb | Zn | 0.7 | 0.1 | 0.2 | 3 | $6.92\times10^{-4}$ |
| | EX. D1 1 | $Li_{3.2}Yb_{0.7}Gd_{0.1}Zn_{0.2}Br_3Cl_3$ | Gd | Zn | 0.7 | 0.1 | 0.2 | 3 | $7.78\times10^{-4}$ |
| | EX. D12 | $Li_{3.2}Yb_{0.7}Sm_{0.1}Zn_{0.2}Br_3Cl_3$ | Sm | Zn | 0.7 | 0.1 | 0.2 | 3 | $7.18\times10^{-4}$ |
| | EX. D13 | $Li_{3.2}Yb_{0.7}Y_{0.1}Zn_{0.2}Cl_6$ | Y | Zn | 0.7 | 0.1 | 0.2 | 0 | $3.93\times10^{-4}$ |
| | EX. D14 | $Li_{3.2}Yb_{0.7}Y_{0.1}Zn_{0.2}Br_6$ | Y | Zn | 0.7 | 0.1 | 0.2 | 6 | $7.19\times10^{-5}$ |
| | EX. D15 | $Li_{3.2}Yb_{0.7}Y_{0.1}Zn_{0.2}Br_1Cl_5$ | Y | Zn | 0.7 | 0.1 | 0.2 | 1 | $5.10\times10^{-4}$ |
| | EX. D16 | $Li_{3.1}Yb_{0.65}Y_{0.25}Zn_{0.1}Br_1Cl_5$ | Y | Zn | 0.65 | 0.25 | 0.1 | 1 | $8.00\times10^{-4}$ |
| | EX. D17 | $Li_{3.1}Yb_{0.8}Y_{0.1}Zn_{0.2}Br_1Cl_5$ | Y | Zn | 0.8 | 0.1 | 0.1 | 1 | $7.30\times10^{-4}$ |
| | EX. D18 | $Li_{3.1}Yb_{0.7}Y_{0.2}Zn_{0.2}Br_1Cl_5$ | Y | Zn | 0.7 | 0.2 | 0.1 | 1 | $7.51\times10^{-4}$ |
| | EX. D19 | $Li_{3.05}Yb_{0.7}Y_{0.25}Zn_{0.05}Br_1Cl_5$ | Y | Zn | 0.7 | 0.25 | 0.05 | 1 | $1.01\times10^{-3}$ |
| | EX. D20 | $Li_{2.6}Yb_{0.7}Y_{0.3}Zn_{0.2}Br_1Cl_5$ | Y | Zn | 0.7 | 0.3 | 0.2 | 1 | $5.42\times10^{-4}$ |
| | EX. D21 | $Li_{2.7}Yb_{0.7}Y_{0.3}Zn_{0.15}Br_1Cl_5$ | Y | Zn | 0.7 | 0.3 | 0.15 | 1 | $7.29\times10^{-4}$ |
| | EX. D22 | $Li_{2.9}Yb_{0.7}Y_{0.3}Zn_{0.05}Br_1Cl_5$ | Y | Zn | 0.7 | 0.3 | 0.05 | 1 | $9.39\times10^{-4}$ |
| | EX. D23 | $Li_{3.1}Yb_{0.65}Y_{0.25}Mg_{0.1}Br_1Cl_5$ | Y | Mg | 0.65 | 0.25 | 0.1 | 1 | $8.01\times10^{-4}$ |
| | EX. D24 | $Li_{2.7}Yb_{0.7}Y_{0.3}Mg_{0.15}Br_1Cl_5$ | Y | Mg | 0.7 | 0.3 | 0.15 | 1 | $3.67\times10^{-4}$ |
| | EX. D25 | $Li_{3.1}Yb_{0.65}Y_{0.25}Ca_{0.1}Br_1Cl_5$ | Y | Ca | 0.65 | 0.25 | 0.1 | 1 | $6.22\times10^{-4}$ |
| | EX. D26 | $Li_{2.9}Yb_{0.7}Y_{0.3}Ca_{0.05}Br_1Cl_5$ | Y | Ca | 0.7 | 0.3 | 005 | 1 | $9.13\times10^{-4}$ |
| | EX. D27 | $Li_{2.7}Yb_{0.7}Y_{0.3}Ca_{0.15}Br_1Cl_5$ | Y | Ca | 0.7 | 0.3 | 0.15 | 1 | $5.67\times10^{-4}$ |
| | COMP. EX. D1 | $Li_3YbCl_6$ | - | - | 0 | 0 | 0 | | $4.98\times10^{-5}$ |
| | COMP. EX. D2 | $Li_3YbBr_6$ | - | - | 0 | 0 | 0 | | $3.31\times10^{-5}$ |

[Table 2]

| | Angles of diffraction peaks assigned to first crystal phase (°) | |
|---|---|---|
| | 13.0° to 15.0° | 26.0° to 35.0° |
| EX. D1 | 14.45 | 29.11, 33.44 |
| EX. D2 | 14.42 | 29.06, 33.43 |
| EX. D4 | 14.45 | 29.08, 33.43 |
| EX. D5 | 14.45 | 29.08, 33.41 |
| EX. D7 | 14.52 | 29.15, 33.44 |

(continued)

|  | Angles of diffraction peaks assigned to first crystal phase (°) | |
|---|---|---|
|  | 13.0° to 15.0° | 26.0° to 35.0° |
| EX. D8 | 14.11 | 28.25, 32.79 |
| EX. D9 | 14.15 | 28.32, 32.91 |
| EX. D10 | 14.18 | 28.51, 32.83 |
| EX. D1 1 | 14.16 | 28.30, 32.79 |
| EX. D12 | 14.27 | 28.43, 32.98 |
| EX. D13 | 14.64 | 29.19, 33.90 |
| EX. D14 | 13.92 | 27.71, 32.11 |
| EX. D15 | 14.49 | 29.19, 33.55 |
| EX. D16 | 14.53 | 29.19, 33.48 |
| EX. D17 | 14.49 | 29.16, 33.51 |
| EX. D18 | 14.49 | 29.15, 33.47 |
| EX. D19 | 14.46 | 29.12, 33.43 |
| EX. D22 | 14.49 | 29.11, 33.47 |
| EX. D23 | 14.46 | 29.12, 33.44 |
| EX. D24 | 14.49 | 29.15, 33.48 |
| EX. D26 | 14.49 | 29.12, 33.36 |
| COMP. EX. D2 | 13.84 | 27.67, 32.11 |

[Table 3]

|  | Angles of diffraction peaks assigned to second crystal phase (°) | | |
|---|---|---|---|
|  | 20.5° to 24.0° | 30.0° to 35.0° | 39.0° to 42.0° |
| EX. D3 | 21.35, 23.24 | 30.98, 31.62, 33.25 | 40.34 |
| EX. D6 | 21.42, 23.28 | 31.09, 31.70, 33.29 | 40.41 |
| EX. D20 | 21.53, 23.39 | 31.20, 31.77, 33.40 | 40.53 |
| EX. D21 | 21.46, 23.32 | 31.13, 31.73, 33.36 | 40.49 |
| EX. D22 | 21.27, 23.31 | 31.02, 31.66, 33.47 | 40.41 |
| EX. D25 | 21.35, 23.20 | 30.98, 31.59, 33.21 | 40.34 |
| EX. D26 | 21.45, 23.29 | 31.09, 31.73, 33.36 | 40.45 |
| EX. D27 | 21.43, 23.28 | 31.09, 31.62, 33.28 | 40.41 |

<Discussion>

The solid electrolyte materials of EXAMPLES D1 to D27 have a high lithium ion conductivity of greater than or equal to $5.0 \times 10^{-5}$ S/cm near room temperature.

As is clear from the comparison of EXAMPLES D1 to D27 with COMPARATIVE EXAMPLES D1 and D2, the solid electrolyte materials that are represented by the compositional formula (1) and contain M1 and M2 in addition to Li, Yb, and X have markedly high ion conductivity as compared to when the solid electrolytes do not contain M1 and M2. This is probably because the incorporation of M1 and M2 in the solid electrolyte material facilitates the occurrence of lithium ion diffusion pathways in the crystal lattices.

As is clear from the comparison of EXAMPLES D1, D2, D4, D5, and D7 with EXAMPLES D3 and D6, the solid electrolyte materials have particularly high ion conductivity when the solid electrolyte materials contain Mg, Sr, or Zn as M2. This is probably because the solid electrolyte material tends to have an eleventh crystal phase when M2 is Mg, Sr, or Zn. In the materials represented by the compositional formula (4), conductive pathways for lithium ion diffusion are appropriately formed more easily when the crystal phase is an eleventh crystal phase rather than a twelfth crystal phase.

As is clear from the comparison of EXAMPLES D8 and D10 to D12 with EXAMPLE D9, the solid electrolyte materials have particularly high ion conductivity when the solid electrolyte materials contain Y, Tb, Gd, or Sm as M1. This is probably because lithium ion diffusion pathways are formed easily in the crystal lattices when M1 is Y, Tb, Gd, or Sm that is an element having a larger ionic radius than Yb.

As is clear from the comparison of EXAMPLES D8 and D13 with EXAMPLE D14, the solid electrolyte materials have higher ion conductivity when the value of x is less than or equal to 3. This is probably because the size of the anion skeleton is suitable for lithium ion conduction when the value of x is less than or equal to 3.

As is clear from the comparison of EXAMPLES D16 to D19, and D22 with EXAMPLES D15, D20, and D21, the solid electrolyte materials in which M2 is Zn have higher ion conductivity when the value of c is less than or equal to 0.1. Furthermore, as is clear from the comparison of EXAMPLES D5 and D23 with EXAMPLES D2 and D24, the solid electrolyte materials in which M2 is Mg similarly have higher ion conductivity when the value of c is less than or equal to 0.1. Furthermore, as is clear from the comparison of EXAMPLES D6, D25, and D26 with EXAMPLES D3 and D27, the solid electrolyte materials in which M2 is Ca similarly have higher ion conductivity when the value of c is less than or equal to 0.1. This is probably because divalent cations tend to inhibit the diffusion of lithium ion conduction in the crystal lattices.

The batteries of EXAMPLES D1 to D27 were charged and discharged at room temperature.

Hydrogen sulfide was not generated because the solid electrolyte materials of EXAMPLES D1 to D27 did not contain sulfur.

As described above, the solid electrolyte materials according to the present disclosure have high lithium ion conductivity near room temperature and are suitable for providing batteries that can be charged and discharged satisfactorily.

Industrial Applicability

For example, the solid electrolyte materials of the present disclosure and the methods for production thereof are used in batteries (for example, all-solid-state lithium ion secondary batteries).

Reference Signs List

| | |
|---|---|
| 100 | solid electrolyte particle |
| 101 | powder of solid electrolyte material |
| 201 | positive electrode |
| 202 | electrolyte layer |
| 203 | negative electrode |
| 204 | positive electrode active material particle |
| 205 | negative electrode active material particle |
| 300 | pressure forming die |
| 301 | upper punch |
| 302 | die |
| 303 | lower punch |
| 1000 | battery |

**Claims**

1. A solid electrolyte material comprising Li, Yb, M, and X, wherein

   M is at least one selected from the group consisting of Mg, Ca, Sr, Ba, Zn, Y, Tb, Gd, Sm, In, Zr, and Hf, and
   X is at least one selected from the group consisting of F, Cl, Br, and I.

2. The solid electrolyte material according to claim 1, wherein
   M is at least one selected from the group consisting of Mg, Ca, Sr, Ba, and Zn.

3. The solid electrolyte material according to claim 1 or 2, wherein
M is at least one selected from the group consisting of Mg, Ca, Sr, and Zn.

4. The solid electrolyte material according to any one of claims 1 to 3, wherein
X is at least one selected from the group consisting of Cl, Br, and I.

5. The solid electrolyte material according to any one of claims 1 to 4, wherein
M includes Zn.

6. The solid electrolyte material according to any one of claims 1 to 5, wherein

the solid electrolyte material is represented by the following compositional formula (1):

$$Li_{6-3a-2b}Yb_aM_bCl_{6-x-y}Br_xI_y \cdots \qquad (1)$$

wherein the formula satisfies the following five relations: $0.2 \leq a < 1.4$,

$$0 < b < 0.9,$$

$$0 \leq x \leq 6,$$

$$0 \leq y \leq 3,$$

$$0 \leq x + y \leq 6.$$

7. The solid electrolyte material according to claim 6, wherein
the formula satisfies relation: $0.5 \leq a \leq 1.1$.

8. The solid electrolyte material according to claim 6 or 7, wherein
the formula satisfies relation: $0 < b \leq 0.6$.

9. The solid electrolyte material according to any one of claims 6 to 8, wherein
the formula satisfies relation: $0 \leq y \leq 2$.

10. The solid electrolyte material according to any one of claims 1 to 9, wherein
X-ray diffractometry of the solid electrolyte material using Cu-K$\alpha$ radiation gives an X-ray diffraction pattern having:

at least one peak in the range of diffraction angles $2\theta$ of greater than or equal to 13.0° and less than or equal to 15.0°, and
at least two peaks in the range of diffraction angles $2\theta$ of greater than or equal to 26.0° and less than or equal to 35.0°.

11. The solid electrolyte material according to any one of claims 1 to 9, wherein
X-ray diffractometry of the solid electrolyte material using Cu-K$\alpha$ radiation gives an X-ray diffraction pattern having:

at least one peak in the range of diffraction angles $2\theta$ of greater than or equal to 22.0° and less than or equal to 23.5°,
at least two peaks in the range of diffraction angles $2\theta$ of greater than or equal to 31.0° and less than or equal to 35.0°, and
at least one peak in the range of diffraction angles $2\theta$ of greater than or equal to 40.0° and less than or equal to 42.0°.

12. The solid electrolyte material according to any one of claims 1 to 9, wherein
X-ray diffractometry of the solid electrolyte material using Cu-K$\alpha$ radiation gives an X-ray diffraction pattern having:

at least two peaks in the range of diffraction angles 2θ of greater than or equal to 21.0° and less than or equal to 24.0°,
at least two peaks in the range of diffraction angles 2θ of greater than or equal to 31.0° and less than or equal to 35.0°, and
at least one peak in the range of diffraction angles 2θ of greater than or equal to 40.0° and less than or equal to 42.0°.

13. The solid electrolyte material according to claim 1, wherein
M is at least one selected from the group consisting of Y, Tb, Gd, Sm, and In.

14. The solid electrolyte material according to claim 13, wherein
M is at least one selected from the group consisting of Y, Tb, Gd, and Sm.

15. The solid electrolyte material according to claim 13 or 14, wherein
X is at least one selected from the group consisting of Cl, Br, and I.

16. The solid electrolyte material according to any one of claims 13 to 16, wherein

the solid electrolyte material is represented by the following compositional formula (2):

$$Li_{6-3a}(Yb_{1-b}M_b)_aCl_{6-x-y}Br_xI_y \cdots \qquad (2)$$

wherein the formula satisfies the following five relations: $0.5 \leq a \leq 1.5$,

$$0 < b < 1,$$

$$0 \leq x \leq 6,$$

$$0 \leq y \leq 3,$$

and

$$0 \leq x + y \leq 6.$$

17. The solid electrolyte material according to claim 16, wherein
the formula satisfies relation: $1 \leq a \leq 1.1$.

18. The solid electrolyte material according to claim 16 or 17, wherein
the formula satisfies relation: $0 \leq y \leq 2$.

19. The solid electrolyte material according to any one of claims 13 to 18, wherein
X-ray diffractometry of the solid electrolyte material using Cu-Kα radiation gives an X-ray diffraction pattern having:

at least one peak in the range of diffraction angles 2θ of greater than or equal to 13.0° and less than or equal to 15.0°, and
at least two peaks in the range of diffraction angles 2θ of greater than or equal to 26.0° and less than or equal to 35.0°.

20. The solid electrolyte material according to any one of claims 13 to 18, wherein
X-ray diffractometry of the solid electrolyte material using Cu-Kα radiation gives an X-ray diffraction pattern having:

at least two peaks in the range of diffraction angles 2θ of greater than or equal to 20.5° and less than or equal to 24.0°,
at least two peaks in the range of diffraction angles 2θ of greater than or equal to 30.0° and less than or equal to 35.0°, and
at least one peak in the range of diffraction angles 2θ of greater than or equal to 39.0° and less than or equal to 42.0°.

21. The solid electrolyte material according to claim 1, wherein
M is at least one selected from the group consisting of Zr and Hf.

22. The solid electrolyte material according to claim 21, wherein
X is at least one selected from the group consisting of Cl, Br, and I.

23. The solid electrolyte material according to claim 21 or 22, wherein

the solid electrolyte material is represented by the following compositional formula (3):

$$Li_{6-3a-4b}Yb_aM_bCl_{6-x-y}Br_xI_y \cdots \qquad (3)$$

wherein the formula satisfies the following six relations:

$$0 < a < 1.5,$$

$$0 < b < 1.5,$$

$$0 < 3a + 4b < 6,$$

$$0 \leq x \leq 6,$$

$$0 \leq y \leq 3,$$

and

$$0 \leq x + y \leq 6.$$

24. The solid electrolyte material according to claim 23, wherein
the formula satisfies relation: 0 < a < 1.

25. The solid electrolyte material according to claim 23 or 24, wherein
the formula satisfies relation: 0 < b < 1.

26. The solid electrolyte material according to any one of claims 23 to 25, wherein
the formula satisfies relation: $0 \leq x \leq 3$.

27. The solid electrolyte material according to any one of claims 23 to 26, wherein
the formula satisfies relation: $0 \leq y \leq 2$.

28. The solid electrolyte material according to any one of claims 21 to 27, wherein
X-ray diffractometry of the solid electrolyte material using Cu-Kα radiation gives an X-ray diffraction pattern having:

at least one peak in the range of diffraction angles 2θ of greater than or equal to 14.0° and less than or equal to 18.0°,
at least one peak in the range of diffraction angles 2θ of greater than or equal to 29.0° and less than or equal to 35.0°, and
at least one peak in the range of diffraction angles 2θ of greater than or equal to 48.0° and less than or equal to 52.0°.

29. The solid electrolyte material according to any one of claims 21 to 27, wherein
X-ray diffractometry of the solid electrolyte material using Cu-Kα radiation gives an X-ray diffraction pattern having:

at least two peaks in the range of diffraction angles 2θ of greater than or equal to 26.0° and less than or equal to 35.0°, and
at least one peak in the range of diffraction angles 2θ of greater than or equal to 13.0° and less than or equal to 17.0°.

30. The solid electrolyte material according to claim 1, wherein

M includes M1 and M2,
M1 is at least one selected from the group consisting of Y, Tb, Gd, Sm, and In, and
M2 is at least one selected from the group consisting of Mg, Ca, Sr, Ba, and Zn.

31. The solid electrolyte material according to claim 30, wherein
M1 is one selected from the group consisting of Y, Tb, Gd, and Sm.

32. The solid electrolyte material according to claim 30 or 31, wherein
M2 is at least one selected from the group consisting of Mg, Ca, Sr, and Zn.

33. The solid electrolyte material according to any one of claims 30 to 32, wherein
X is at least one selected from the group consisting of Cl and Br.

34. The solid electrolyte material according to any one of claims 30 to 33, wherein

the solid electrolyte material is represented by the following compositional formula (4):

$$Li_{6-3a-3b-2c}Yb_aM1_bM2_cCl_{6-x}Br_x \cdots \qquad (4)$$

wherein the formula satisfies the following four relations:

$$0.3 \leq a \leq 1.2,$$

$$0 < b \leq 0.5,$$

$$0 < c \leq 0.4,$$

and

$$0 \leq x \leq 6.$$

35. The solid electrolyte material according to claim 34, wherein
the formula satisfies relation: $0.65 \leq a < 1$.

36. The solid electrolyte material according to claim 34 or 35, wherein
the formula satisfies relation: $0 < b \leq 0.3$.

37. The solid electrolyte material according to any one of claims 34 to 36, wherein
the formula satisfies relation: $0 < c \leq 0.2$.

38. The solid electrolyte material according to any one of claims 30 to 37, wherein
X-ray diffractometry of the solid electrolyte material using Cu-Kα radiation gives an X-ray diffraction pattern having:

at least one peak in the range of diffraction angles 2θ of greater than or equal to 13.0° and less than or equal to 15.0°, and

at least two peaks in the range of diffraction angles 2θ of greater than or equal to 26.0° and less than or equal to 35.0°.

39. The solid electrolyte material according to any one of claims 30 to 37, wherein
X-ray diffractometry of the solid electrolyte material using Cu-Kα radiation gives an X-ray diffraction pattern having:

at least two peaks in the range of diffraction angles 2θ of greater than or equal to 20.5° and less than or equal to 24.0°,

at least two peaks in the range of diffraction angles 2θ of greater than or equal to 30.0° and less than or equal to 35.0°, and

at least one peak in the range of diffraction angles 2θ of greater than or equal to 39.0° and less than or equal to 42.0°.

40. A battery comprising:

a positive electrode;
a negative electrode; and
an electrolyte layer disposed between the positive electrode and the negative electrode, wherein
at least one selected from the group consisting of the positive electrode, the negative electrode, and the electrolyte layer contains the solid electrolyte material described in any one of claims 1 to 39.

# FIG. 1

# FIG. 2

# FIG. 3

# FIG. 4

13.0°−15.0°    26.0°−35.0°

INTENSITY (a.u.)

2Θ (deg)

COMP. EX. A2
EX. A24
EX. A23
EX. A22
EX. A21
EX. A20
EX. A19
EX. A18
EX. A17
EX. A16
EX. A14
EX. A13
EX. A12
EX. A11
EX. A10
EX. A9
EX. A8
EX. A7
EX. A6
EX. A5
EX. A4
EX. A3
EX. A1

## FIG. 5

# FIG. 6

FIG. 7

FIG. 8

# FIG. 9

# FIG. 10

FIG. 11

FIG. 12

# FIG. 13

# FIG. 14

## FIG. 15

## FIG. 16

# FIG. 17

# FIG. 18

# FIG. 19

## INTERNATIONAL SEARCH REPORT

| International application No. |
|---|
| **PCT/JP2021/044436** |

**A.    CLASSIFICATION OF SUBJECT MATTER**

*C01G 9/00*(2006.01)i; *C01G 15/00*(2006.01)i; *C01G 25/00*(2006.01)i; *C01G 27/00*(2006.01)i; *C03C 10/16*(2006.01)i; *H01M 4/13*(2010.01)i; *H01M 4/62*(2006.01)i; *H01B 1/06*(2006.01)i; *C01F 17/36*(2020.01)i; *H01M 10/052*(2010.01)i; *H01M 10/0562*(2010.01)i
FI:   H01B1/06 A; H01M10/0562; H01M10/052; H01M4/62 Z; H01M4/13; C01F17/36; C03C10/16; C01G15/00 B; C01G25/00; C01G27/00; C01G9/00 B

According to International Patent Classification (IPC) or to both national classification and IPC

**B.    FIELDS SEARCHED**

Minimum documentation searched (classification system followed by classification symbols)

C01G9/00; C01G15/00; C01G25/00; C01G27/00; C03C10/16; H01M4/13; H01M4/62; H01M10/052; H01M10/0562; H01B1/06; C01F17/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2018-92863 A (TOYOTA MOTOR CORP.) 14 June 2018 (2018-06-14) paragraphs [0019]-[0068], fig. 1-9 | 1-3, 13-14, 21, 40 |
| A | | 4-12, 15-20, 22-39 |
| X | CN 111900462 A (CHINA AUTOMOTIVE BATTERY RESEARCH INSTITUTE CO., LTD.) 06 November 2020 (2020-11-06) paragraphs [0005]-[0074], fig. 1-6 | 1, 4, 13, 15, 21-22, 40 |
| P, X | JP 2021-163522 A (TDK CORP.) 11 October 2021 (2021-10-11) paragraphs [0017]-[0106], example 15, fig. 1-5 | 1-4, 13-15, 21-22, 28, 40 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 January 2022** | **01 February 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2021/044436**

| Patent document cited in search report | | | Publication date (day/month/year) | Patent family member(s) | Publication date (day/month/year) |
|---|---|---|---|---|---|
| JP | 2018-92863 | A | 14 June 2018 | US 2018/0159129 A1 paragraphs [0028]-[0110], fig. 1-9 | |
| CN | 111900462 | A | 06 November 2020 | (Family: none) | |
| JP | 2021-163522 | A | 11 October 2021 | (Family: none) | |

Form PCT/ISA/210 (patent family annex) (January 2015)

**EP 4 299 525 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011129312 A

**Non-patent literature cited in the description**

- *Z. anorg. allg. Chem.,* 1997, vol. 623, 1067-1073
- *Z. anorg. allg. Chem.,* 1997, vol. 623, 1352-1356